# EUROPEAN PATENT APPLICATION

(11) **EP 4 711 067 A1**
(43) Date of publication of application: **18.03.2026**
(21) Application number: 24929796.1
(22) Date of filing: 12.03.2024
(51) Int. Cl.: B23K 26/00

(54) **MACHINING PATH GENERATION METHOD, LASER MACHINING SYSTEM, PROGRAM, AND LASER MACHINING METHOD**

(71) Applicant: Yamazaki Mazak Corporation, Niwa-gun, Aichi 480-0197 (JP)
(72) Inventor: KATAYAMA, Takuro, Niwa-gun, Aichi 480-0197 (JP); SAKAI, Yoshihiko, Niwa-gun, Aichi 480-0197 (JP); KOIKE, Shunsuke, Niwa-gun, Aichi 480-0197 (JP); IIDA, Shuto, Niwa-gun, Aichi 480-0197 (JP); MILEVICH, Alexander, Niwa-gun, Aichi 480-0197 (JP)
(74) Representative: TBK
(86) International application number: PCT/JP2024/009568
(87) International publication number: WO 2025/191689

(57) **Abstract**

A machining path generation method includes preparing an assembly model that is a combination of a plurality of models including a first model obtained by modeling a first elongated member and a second model obtained by modeling a second elongated member. First identification processing is executed. The first identification processing includes identifying a second identifier that is an identifier of the second model in response to selection of the first model and the second model adjacent to the first model in the assembly model. A first machining path is generated. The first machining path includes a first engraving formation path for forming first laser beam engraving expressing a first identifier that is an identifier of the first model on the first elongated member and a second engraving formation path for forming second laser beam engraving expressing the second identifier identified by the first identification processing executed, on the first elongated member.

## Description

### Technical Field

The present invention relates to a machining path generation method, a laser beam machining system, a program, and a laser beam machining method.

### Background Art

According to a known technique, one of two members to be coupled is provided with a mark identifying the other member, which is the coupling target.

Example related techniques include coupled members disclosed in PTL1. In the coupled members described in PTL1, a coupling part between one coupled member and the other coupled member is provided with a coupling mark. The coupling mark includes a sign indicating the order of the coupling.

### Citation List

### Patent Literature

PTL1: JP 2002-98115 A

### Summary of Invention

### Technical Problem

An object of the present invention is to provide a machining path generation method, a laser beam machining system, a program, and a laser beam machining method enabling an elongated member to be precisely provided with laser beam engraving for efficiently connecting the elongated member with another elongated member.

### Solution to Problem

A machining path generation method according to some embodiments includes preparing an assembly model that is a combination of a plurality of models including a first model obtained by modeling a first elongated member and a second model obtained by modeling a second elongated member. First identification processing is executed. The first identification processing includes identifying a second identifier that is an identifier of the second model in response to selection of the first model and the second model adjacent to the first model in the assembly model. A first machining path is generated. The first machining path includes a first engraving formation path for forming first laser beam engraving expressing a first identifier that is an identifier of the first model on the first elongated member and a second engraving formation path for forming second laser beam engraving expressing the second identifier identified by the first identification processing executed, on the first elongated member.

A laser beam machining system according to some embodiments includes: a machining path generator configured to execute preparation processing of preparing an assembly model that is a combination of a plurality of models including a first model obtained by modeling a first elongated member and a second model obtained by modeling a second elongated member, first identification processing including identifying a second identifier that is an identifier of the second model in response to selection of the first model and the second model adjacent to the first model in the assembly model, and first generation processing of generating a first machining path including a first engraving formation path for forming first laser beam engraving expressing a first identifier that is an identifier of the first model on the first elongated member, a second engraving formation path for forming second laser beam engraving expressing the second identifier identified by the first identification processing executed, on the first elongated member, and a first cutting path for cutting out the first elongated member from a first elongated workpiece; a controller configured to execute a machining program generated based at least on the first machining path to generate a control command and transmit the generated control command to a laser beam machine; and the laser beam machine configured to operate based on the control command and irradiate the first elongated workpiece with a laser beam to produce the first elongated member from the first elongated workpiece.

A program according to some embodiments is a program for causing a machining path generator or a laser beam machining system to execute the above-described machining path generation method.

A laser beam machining method according to some embodiments includes preparing an assembly model that is a combination of a plurality of models including a first model obtained by modeling a first elongated member and a second model obtained by modeling a second elongated member. First identification processing is executed. The first identification processing includes identifying a second identifier that is an identifier of the second model in response to selection of the first model and the second model adjacent to the first model in the assembly model. A first machining path is generated. The first machining path includes a first engraving formation path for forming first laser beam engraving expressing a first identifier that is an identifier of the first model on the first elongated member, a second engraving formation path for forming second laser beam engraving expressing the second identifier identified by the first identification processing executed, on the first elongated member, and a first cutting path for cutting out the first elongated member from a first elongated workpiece. A machining program is generated based at least on the first machining path. A control command is generated by a controller executing the machining program The first elongated member is produced from the first elongated workpiece by a laser beam machine receiving the control command and irradiating the first elongated workpiece with a laser beam.

### Effects of Invention

With the present invention, a machining path generation method, a laser beam machining system, a program, and a laser beam machining method enabling an elongated member to be precisely provided with laser beam engraving for efficiently connecting the elongated member with another elongated member can be provided. As an example, a worker can efficiently connect an elongated member with another elongated member without referring to an assembly diagram or a parts diagram. It is a matter of course that the worker can refer to the assembly diagram and/or the parts diagram for confirmation or the like. Brief Description of Drawings

[FIG. 1] FIG. 1 is a diagram schematically illustrating a laser beam machining system according to embodiment 1.
[FIG. 2] FIG. 2 is a diagram schematically illustrating how a machining path generator receives model data indicating the shape and arrangement of each of a plurality of models from a CAD device.
[FIG. 3] FIG. 3 is a schematic perspective view schematically illustrating an example of a first elongated member and a second elongated member.
[FIG. 4] FIG. 4 is a diagram illustrating an example of an image displayed on a display.
[FIG. 5] FIG. 5 is a diagram illustrating an example of an image displayed on the display.
[FIG. 6] FIG. 6 is a diagram schematically illustrating an example of a first machining path.
[FIG. 7] FIG. 7 is a diagram schematically illustrating an example of the first machining path.
[FIG. 8] FIG. 8 is a diagram schematically illustrating an example of a second machining path.
[FIG. 9] FIG. 9 is a diagram schematically illustrating an example of the machining path generator.
[FIG. 10] FIG. 10 is an enlarged view of one portion in FIG. 1.
[FIG. 11] FIG. 11 is a schematic perspective view schematically illustrating an example of the first elongated member and the second elongated member produced by the laser beam machining system.
[FIG. 12] FIG. 12 is a schematic perspective view schematically illustrating a state where the first elongated member and the second elongated member are combined.
[FIG. 13] FIG. 13 is a schematic perspective view schematically illustrating an example of a plurality of elongated members including the first elongated member and the second elongated member.
[FIG. 14] FIG. 14 is a diagram illustrating an example of an image displayed on the display.
[FIG. 15] FIG. 15 is a diagram illustrating an example of an image displayed on the display.
[FIG. 16] FIG. 16 is a diagram illustrating an example of an image displayed on the display.
[FIG. 17] FIG. 17 is a diagram illustrating an example of an image displayed on the display.
[FIG. 18] FIG. 18 is an enlarged view of a portion surrounded by a one-dot chain line rectangle F in FIG. 17.
[FIG. 19] FIG. 19 is a diagram illustrating an example of an image displayed on the display.
[FIG. 20] FIG. 20 is a diagram illustrating an example of an image displayed on the display.
[FIG. 21] FIG. 21 is a diagram illustrating an example of an image displayed on the display.
[FIG. 22] FIG. 22 is a diagram illustrating an example of an image displayed on the display.
[FIG. 23] FIG. 23 is an enlarged view of one portion in FIG. 22.
[FIG. 24] FIG. 24 is a diagram illustrating an example of an image displayed on the display.
[FIG. 25] FIG. 25 is a diagram illustrating an example of an image displayed on the display.
[FIG. 26] FIG. 26 is a diagram illustrating an example of an image displayed on the display.
[FIG. 27] FIG. 27 is an enlarged view of a portion surrounded by a one-dot chain line rectangle G in FIG. 26.
[FIG. 28] FIG. 28 is a schematic perspective view schematically illustrating an example of the first elongated member, the second elongated member, and a third elongated member produced by the laser beam machining system.
[FIG. 29] FIG. 29 is a schematic perspective view schematically illustrating a state where a plurality of elongated members including the first elongated member and the second elongated member are combined.
[FIG. 30] FIG. 30 is a diagram illustrating an example of an image displayed on the display.
[FIG. 31] FIG. 31 is a diagram illustrating an example of an image displayed on the display.
[FIG. 32] FIG. 32 is a diagram illustrating an example of an image displayed on the display.
[FIG. 33] FIG. 33 is a diagram schematically illustrating an example of the machining path generator.
[FIG. 34] FIG. 34 is a diagram schematically illustrating an example of the first machining path.
[FIG. 35] FIG. 35 is a diagram schematically illustrating an example of the second machining path.
[FIG. 36] FIG. 36 is a diagram schematically illustrating the laser beam machining system according to embodiment 1.
[FIG. 37] FIG. 37 is a diagram schematically illustrating the laser beam machining system according to embodiment 1.
[FIG. 38] FIG. 38 is a diagram schematically illustrating the laser beam machining system according to embodiment 1.
[FIG. 39] FIG. 39 is a flowchart illustrating an example of a laser beam machining method according to embodiment 2.
[FIG. 40] FIG. 40 is a diagram schematically illustrating an example of a non-volatile storage medium that records a program.

### Description of Embodiments

A machining path generation method, a laser beam machining system 100, a program P, and a laser beam machining method according to embodiments will now be described with reference to the accompanying drawings. In the description of the embodiments, portions and members having the same functions are denoted by the same reference numerals, and the redundant description on the portions and the members denoted by the same reference numerals will be omitted.

### (Embodiment 1)

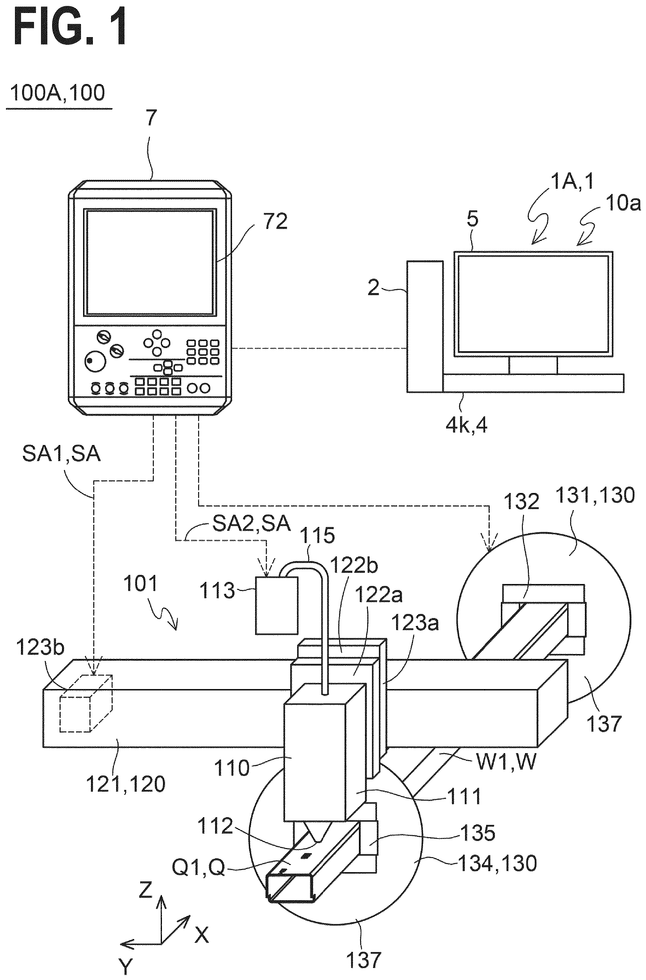

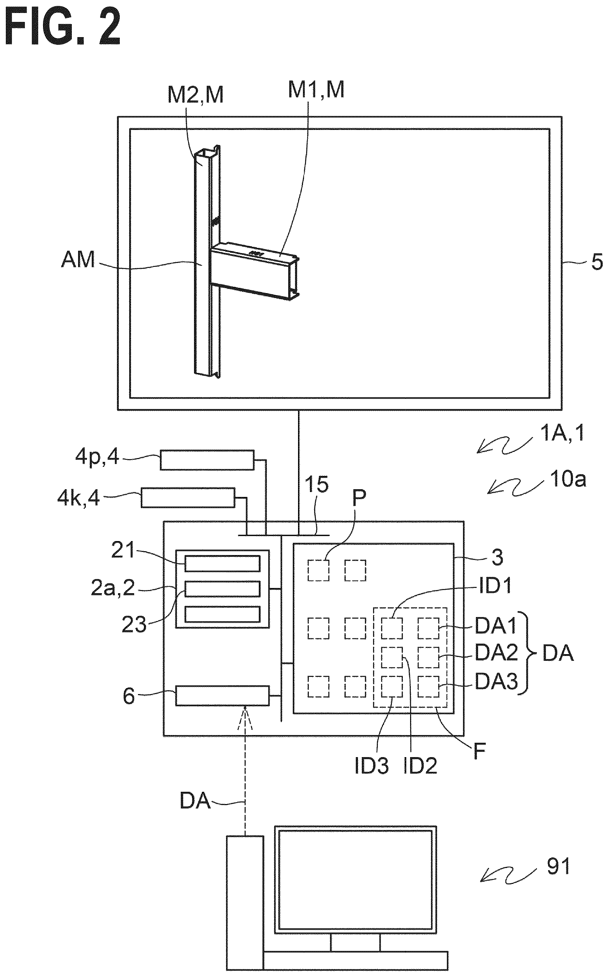

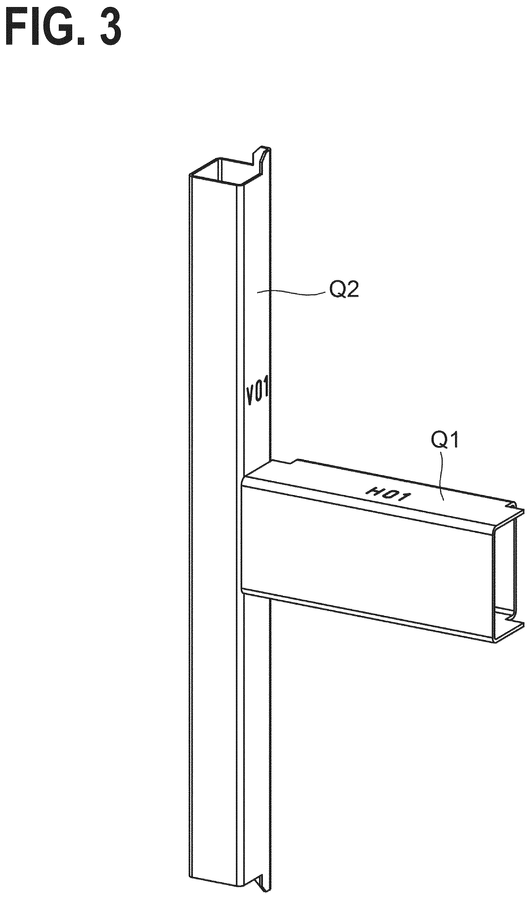

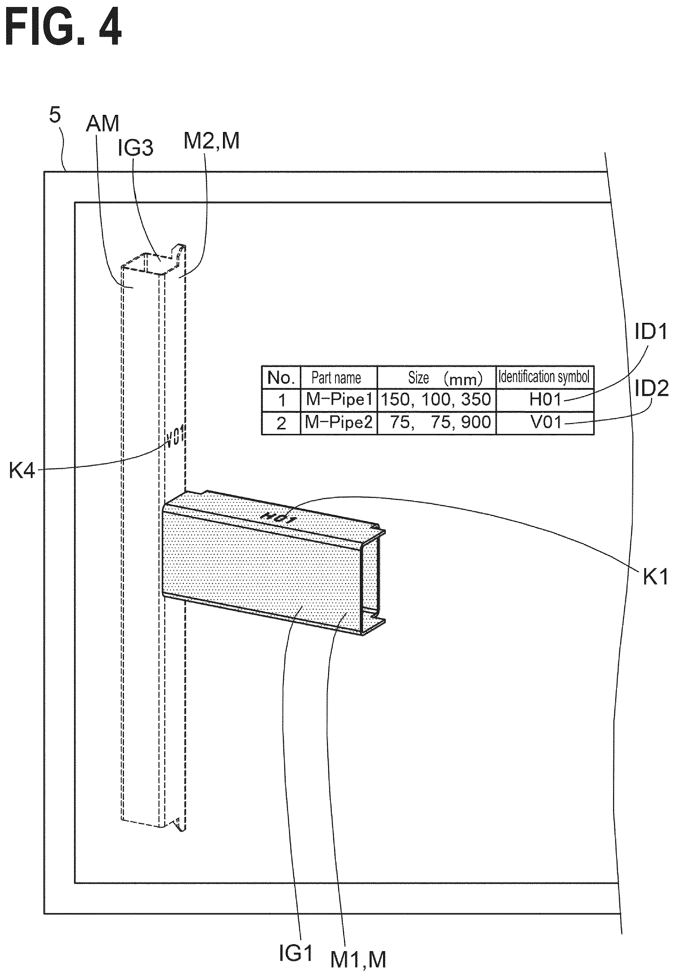

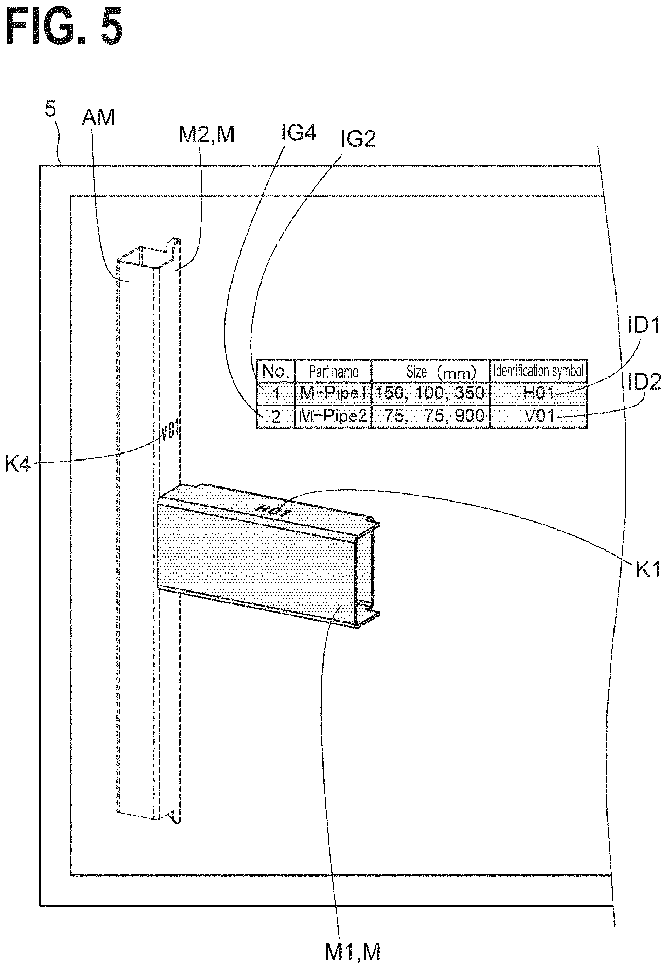

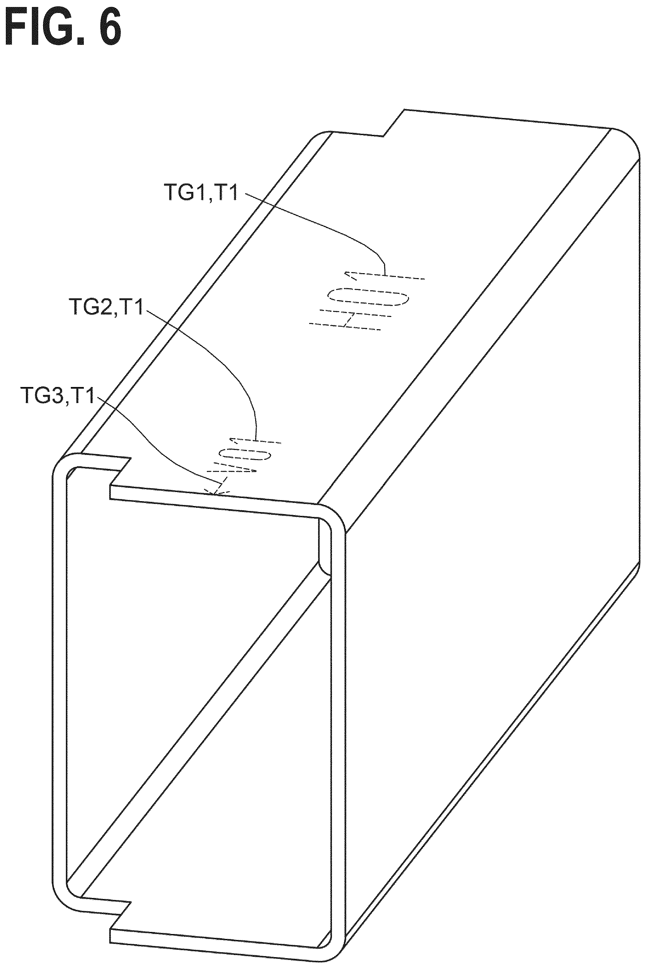

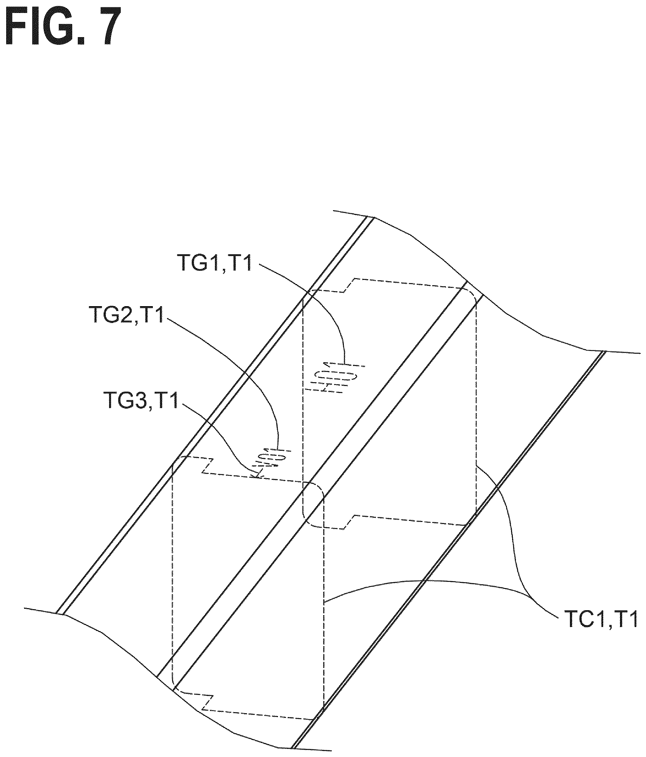

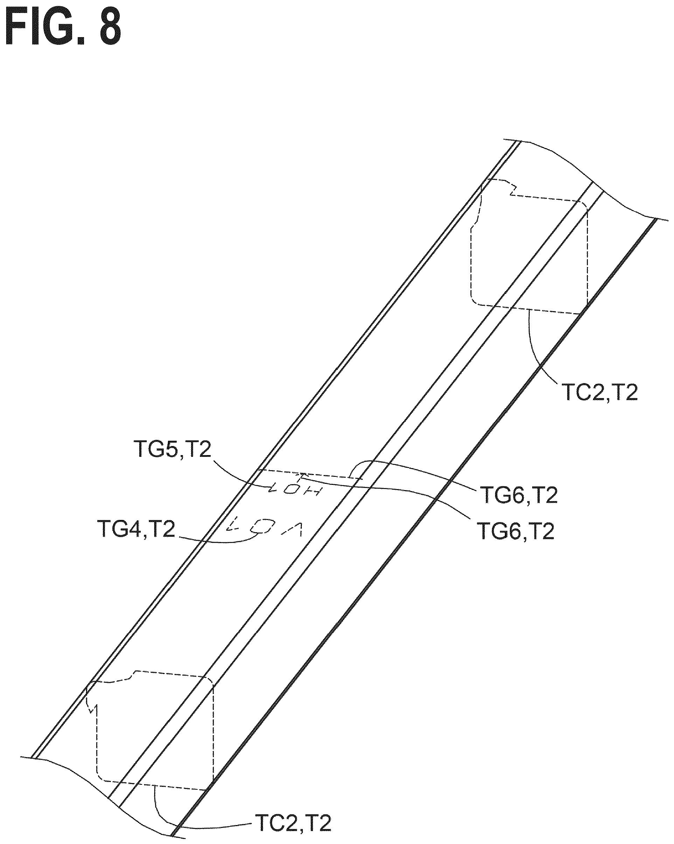

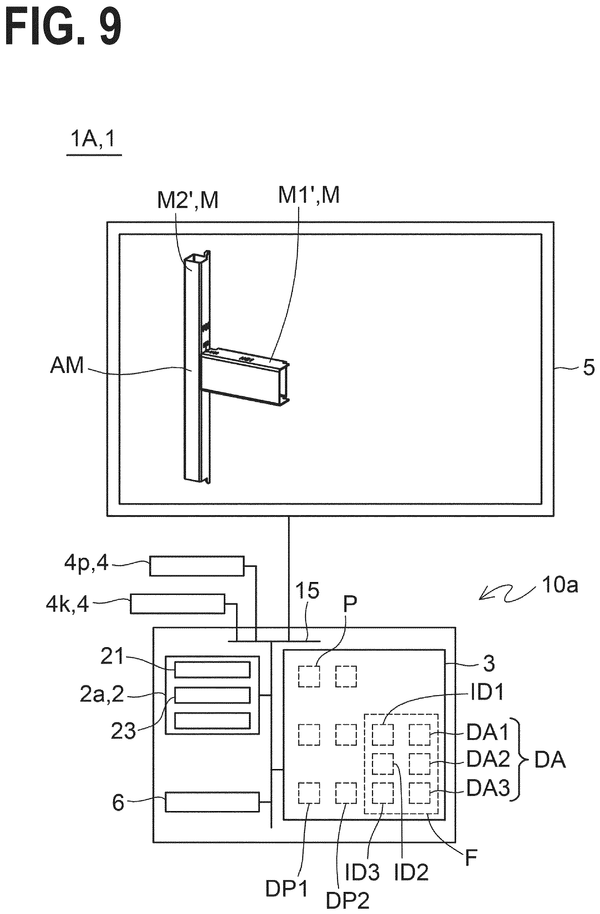

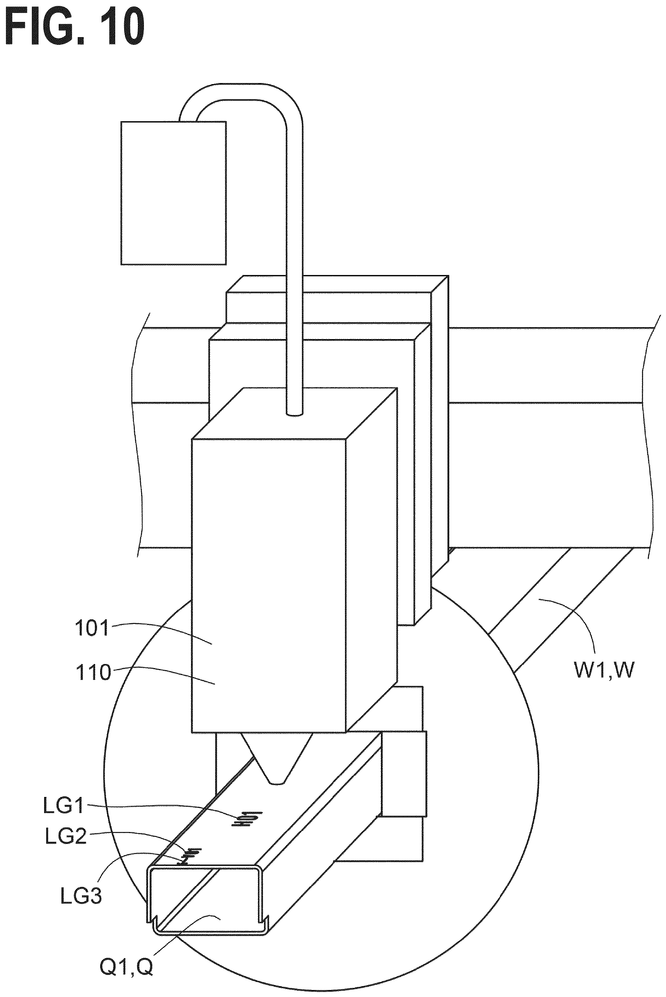

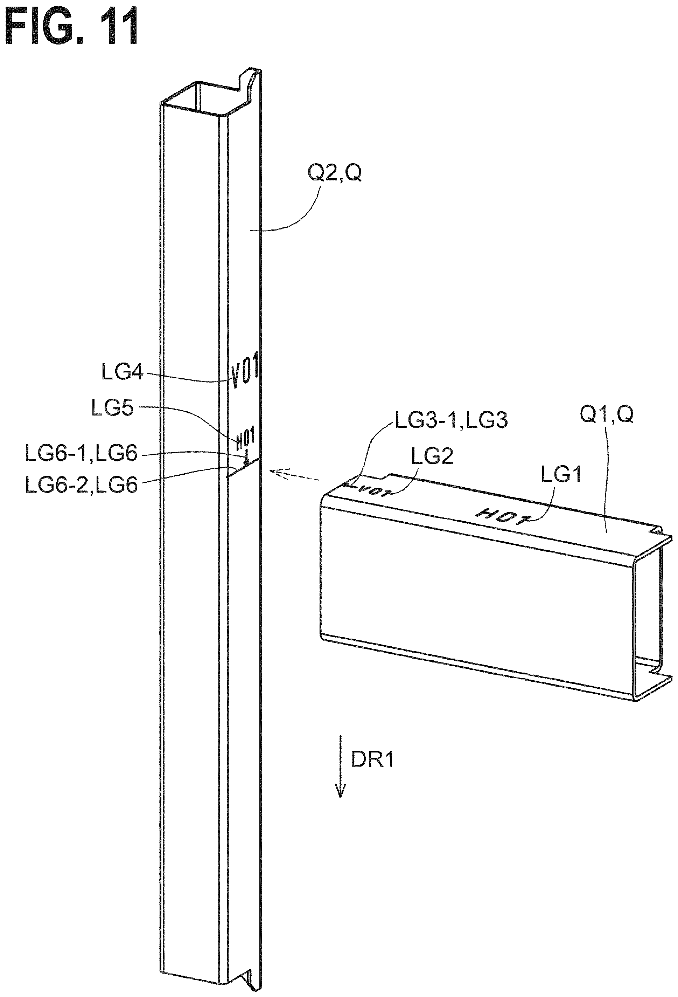

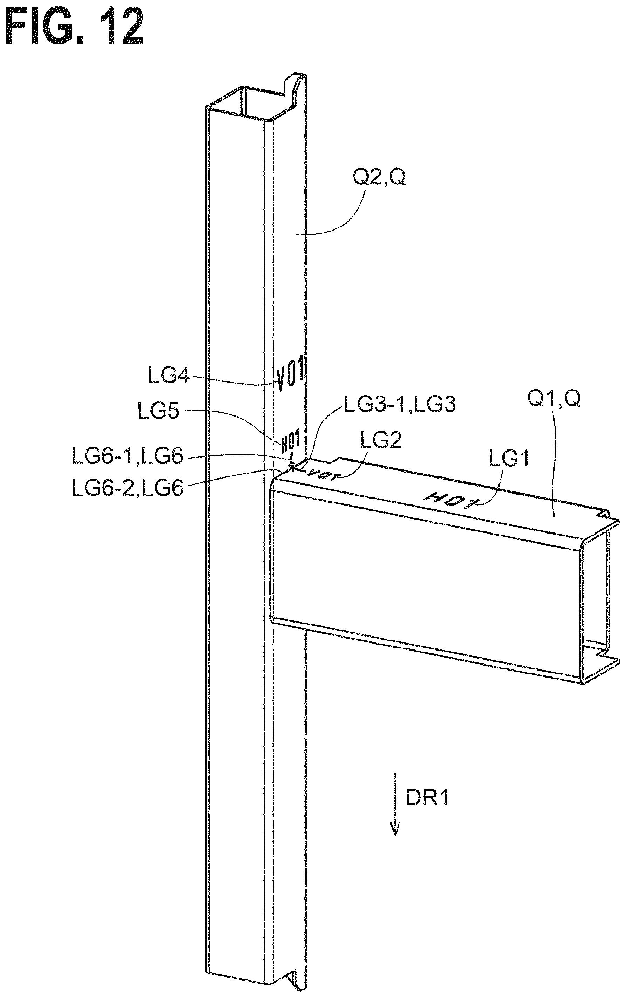

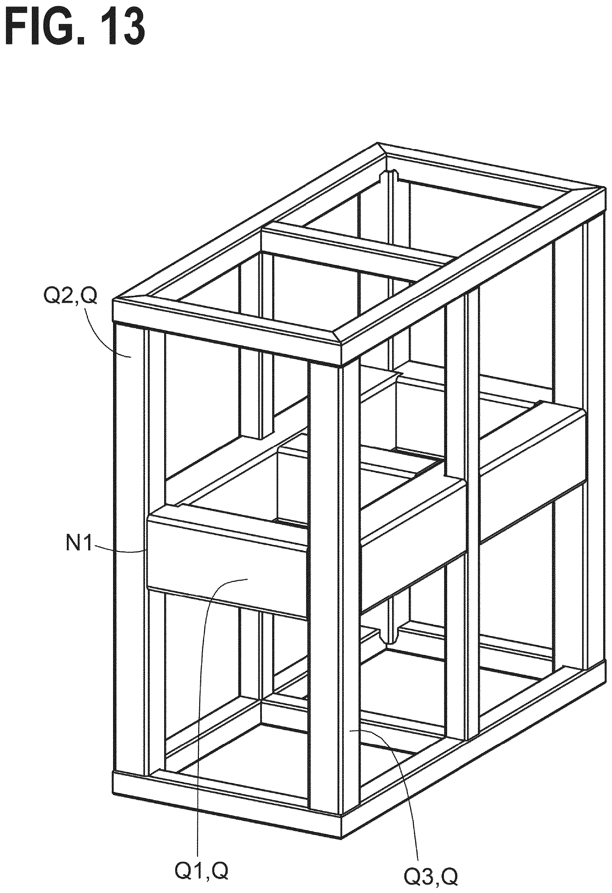

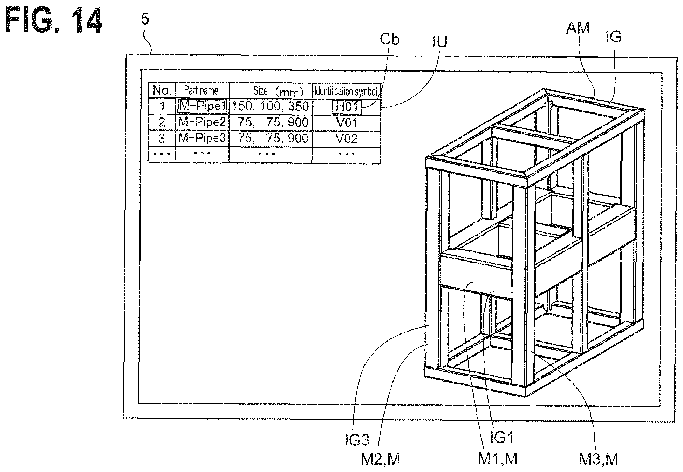

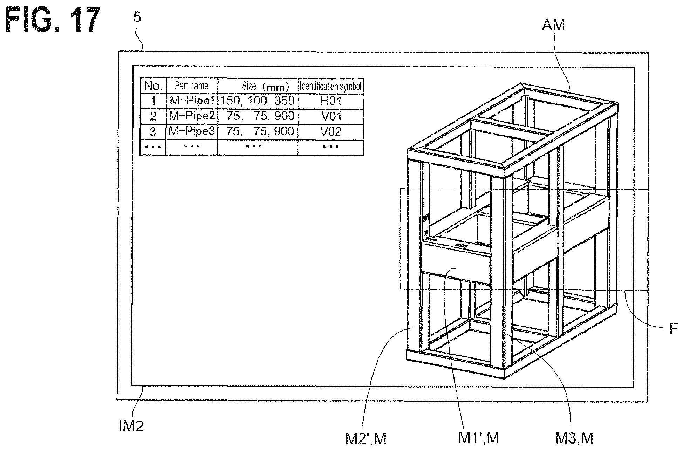

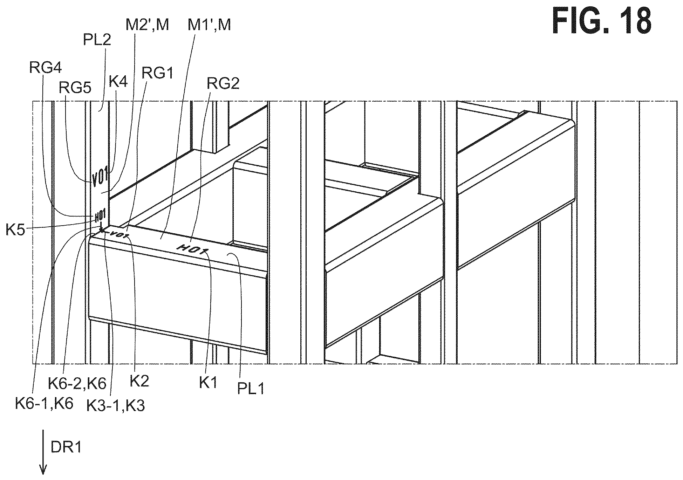

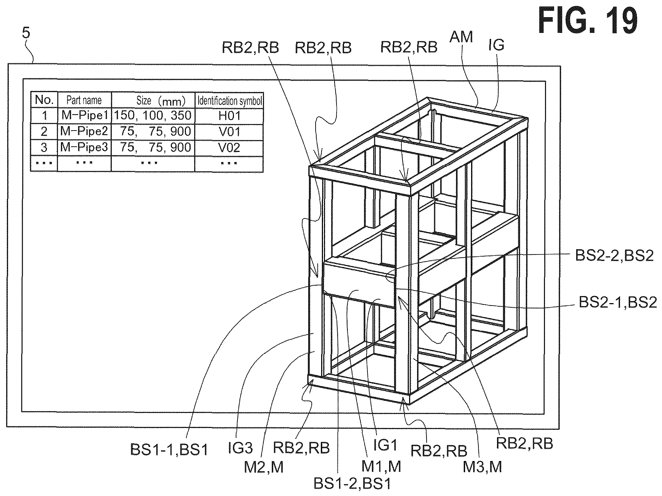

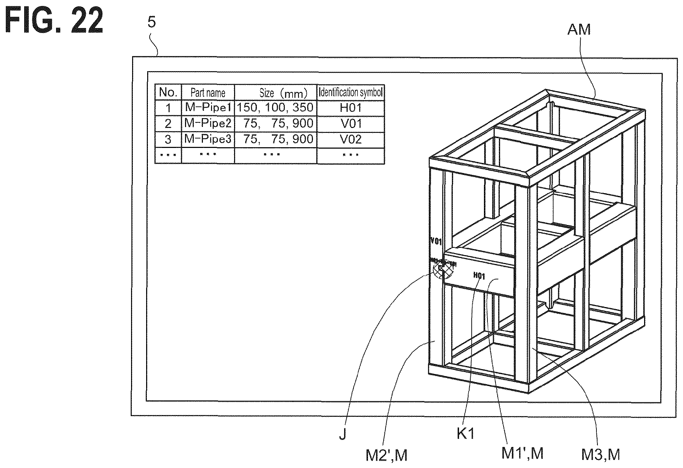

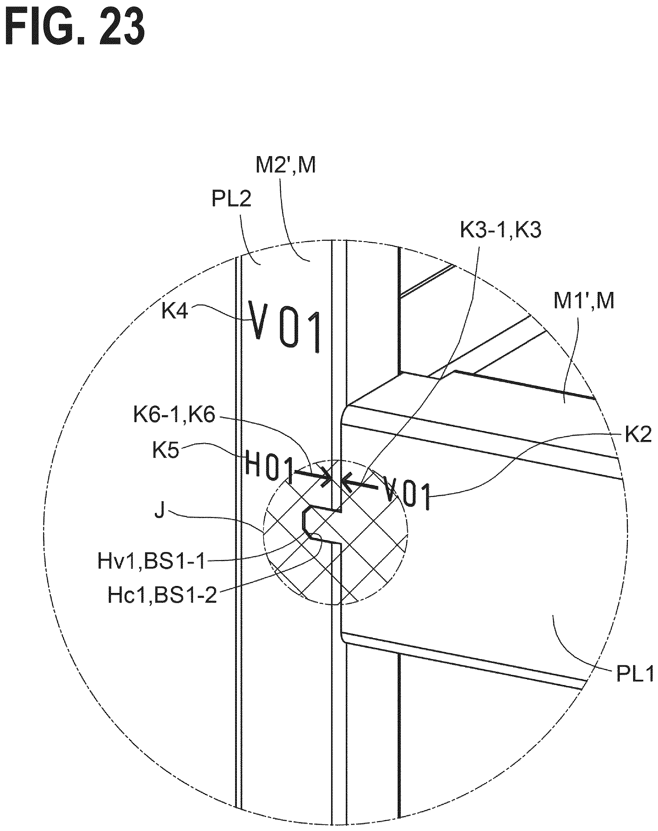

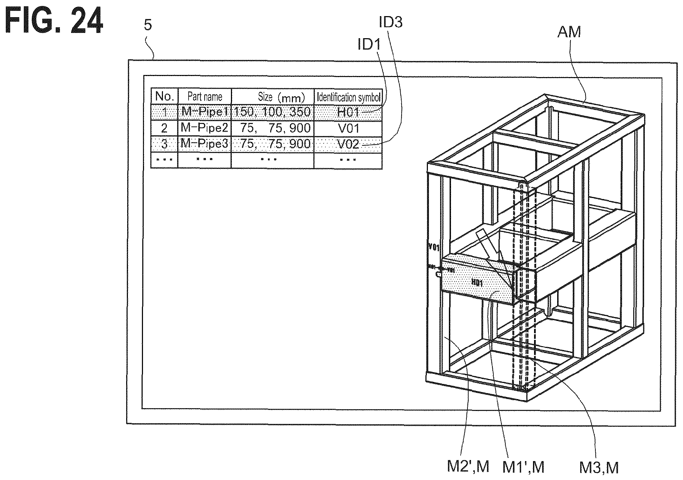

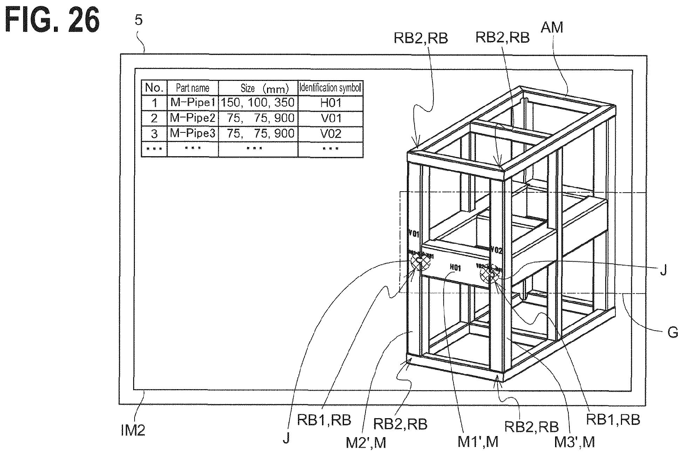

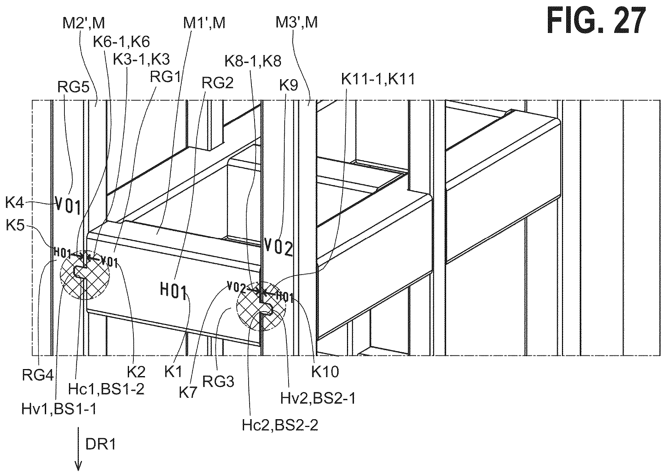

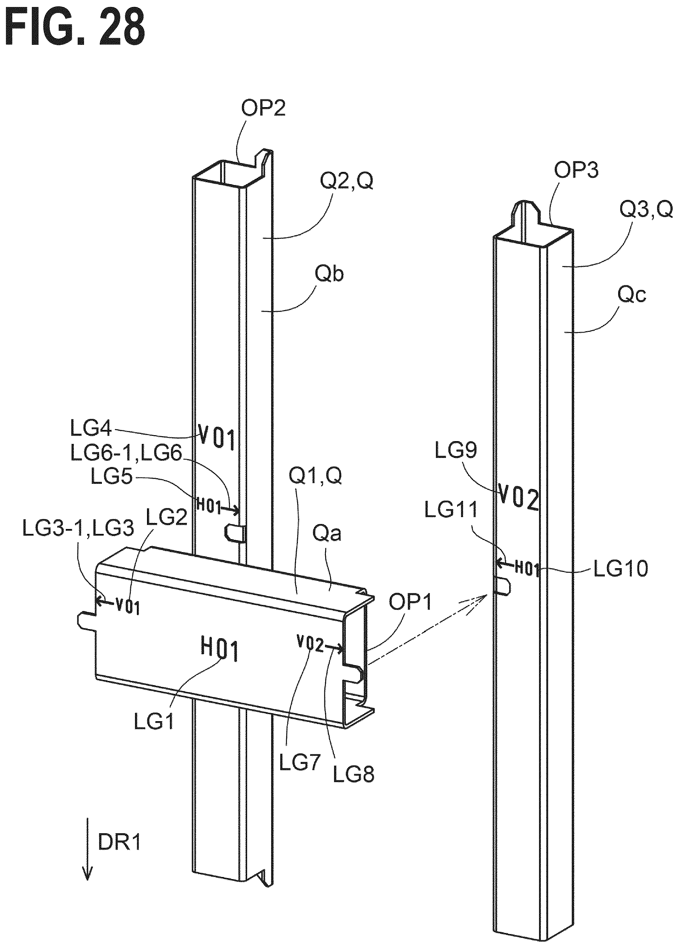

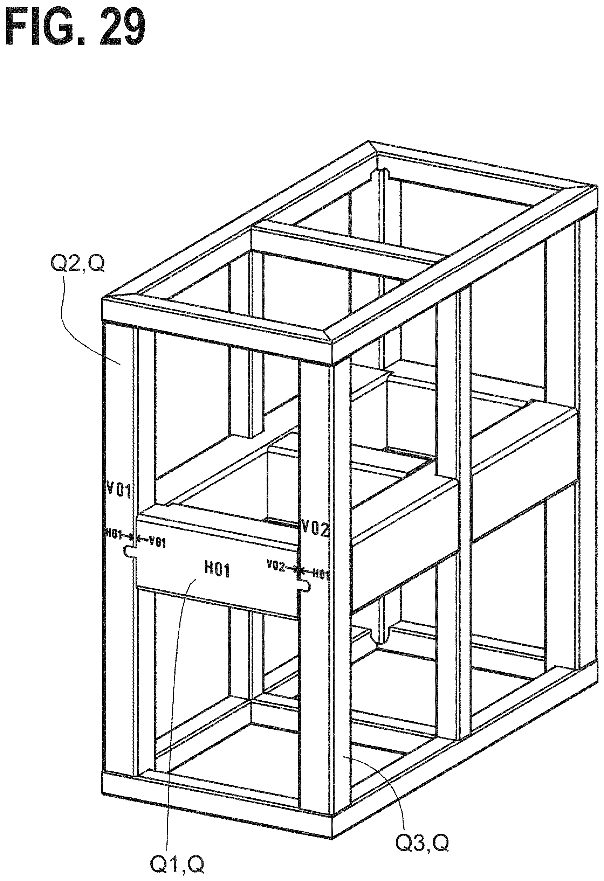

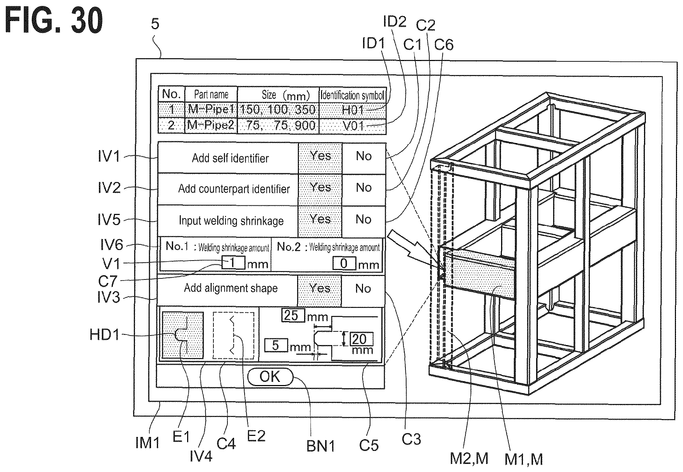

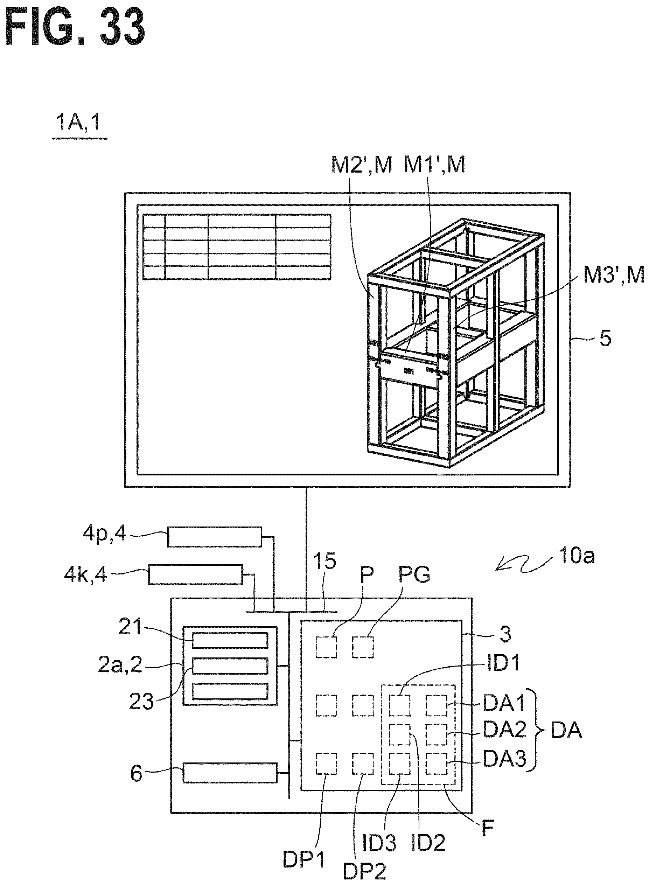

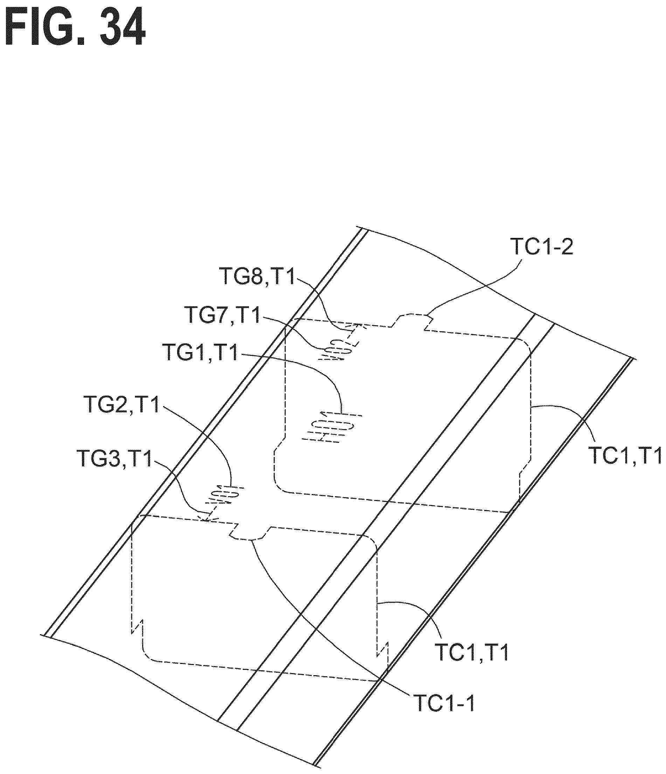

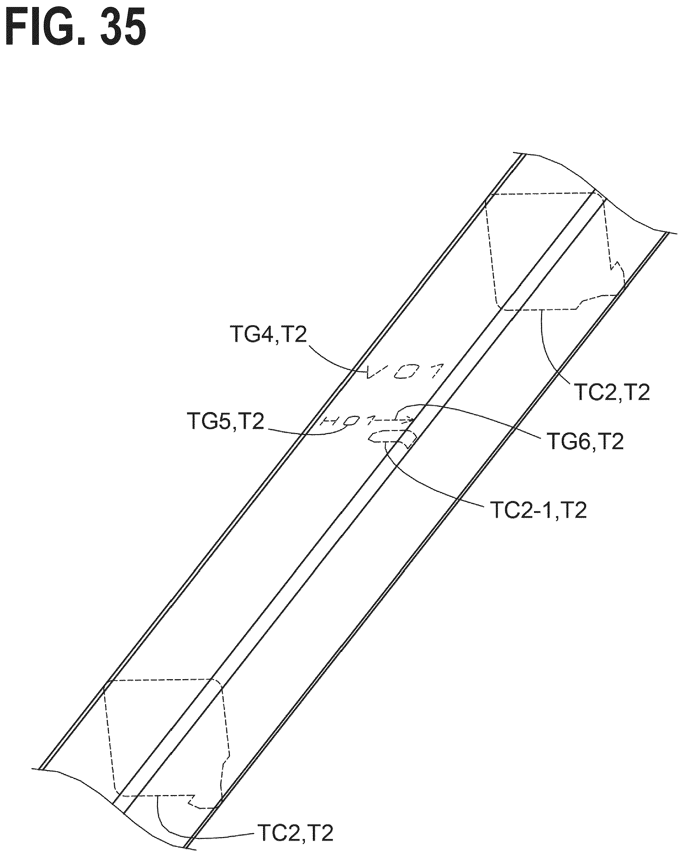

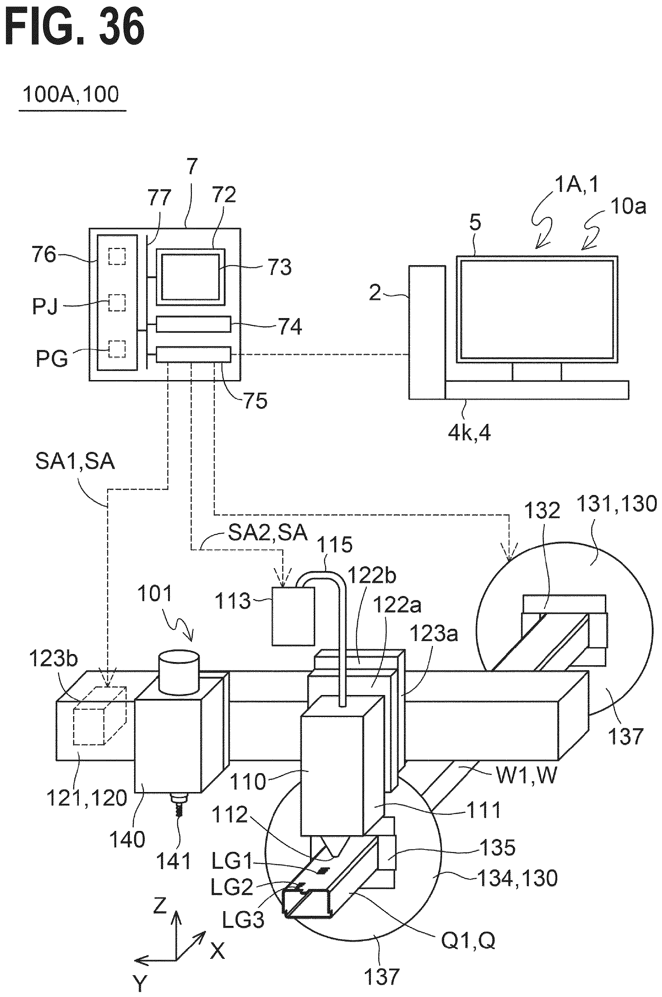

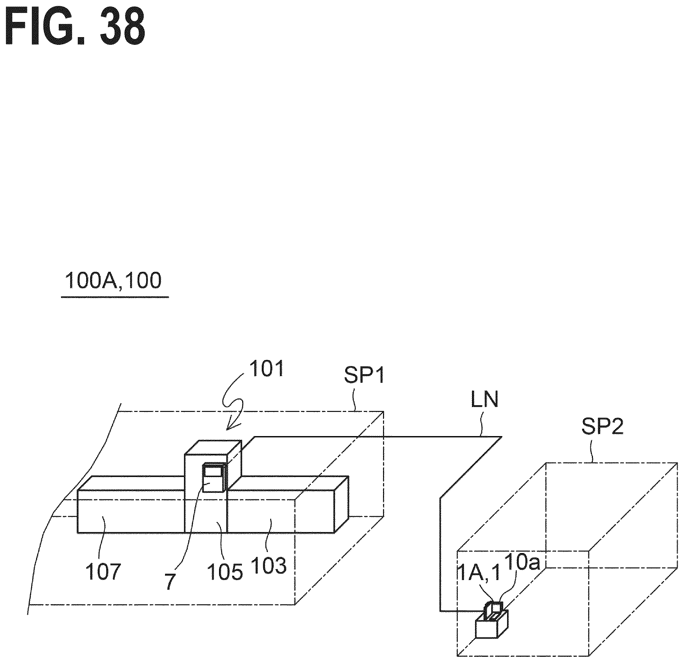

A laser beam machining system 100A according to embodiment 1 will be described with reference to FIG. 1 to see FIG. 38. FIG. 1 is a diagram schematically illustrating the laser beam machining system 100A according to embodiment 1. FIG. 2 is a diagram schematically illustrating how a machining path generator 1A receives model data DA indicating the shape and arrangement of each of a plurality of models M from a CAD device 91. FIG. 3 is a schematic perspective view schematically illustrating an example of a first elongated member Q1 and a second elongated member Q2. FIG. 4 and FIG. 5 are each a diagram illustrating an example of an image displayed on a display 5. FIG. 6 and FIG. 7 are each a diagram schematically illustrating an example of a first machining path T1. FIG. 8 is a diagram schematically illustrating an example of a second machining path T2. FIG. 9 is a diagram schematically illustrating an example of the machining path generator 1A. FIG. 10 is an enlarged view of one portion in FIG. 1. FIG. 11 is a schematic perspective view schematically illustrating an example of the first elongated member Q1 and the second elongated member Q2 produced by the laser beam machining system 100A. FIG. 12 is a schematic perspective view schematically illustrating a state where the first elongated member Q1 and the second elongated member Q2 are combined. FIG. 13 is a schematic perspective view schematically illustrating an example of a plurality of elongated members including the first elongated member Q1 and the second elongated member Q2. FIG. 14 to FIG. 17 are each a diagram illustrating an example of an image displayed on the display 5. FIG. 18 is an enlarged view of a portion surrounded by a one-dot chain line rectangle F in FIG. 17. FIG. 19 to FIG. 22 are each a diagram illustrating an example of an image displayed on the display 5. FIG. 23 is an enlarged view of one portion in FIG. 22. FIG. 24 to FIG. 26 are each a diagram illustrating an example of an image displayed on the display 5. FIG. 27 is an enlarged view of a portion surrounded by a one-dot chain line rectangle G in FIG. 26. FIG. 28 is a schematic perspective view schematically illustrating an example of the first elongated member Q1, the second elongated member Q2, and a third elongated member Q3 produced by the laser beam machining system 100A. FIG. 29 is a schematic perspective view schematically illustrating a state where a plurality of elongated members including the first elongated member Q1 and the second elongated member Q2 are combined. FIG. 30 to FIG. 32 are each a diagram illustrating an example of an image displayed on the display 5. FIG. 33 is a diagram schematically illustrating an example of the machining path generator 1A. FIG. 34 is a diagram schematically illustrating an example of the first machining path T1. FIG. 35 is a diagram schematically illustrating an example of the second machining path T2. FIG. 36 to FIG. 38 are each a diagram schematically illustrating the laser beam machining system 100A according to embodiment 1.

As in the example illustrated in FIG. 1, the laser beam machining system 100A includes the machining path generator 1A, a controller 7, and a laser beam machine 101.

The machining path generator 1A generates a machining path for producing an elongated member Q from an elongated workpiece W. In this specification, the machining path means a path of a laser beam or a tool for machining the elongated workpiece W.

The controller 7 executes a machining program generated based on the machining path to generate a control command SA and transmit the generated control command SA to the laser beam machine 101.

The laser beam machine 101 operates based on the control command SA and irradiates the elongated workpiece W with a laser beam to produce the elongated member Q from the elongated workpiece W.

In the example illustrated in FIG. 2, the machining path generator 1A (for example, a CAD/CAM device 10a) includes a calculator 2, a memory 3, an inputter 4, the display 5, and a communication circuit 6. The inputter 4 may include a keyboard 4k, may include a pointer 4p such as a mouse, or may include a touch panel that is a display with a touch panel.

FIG. 3 illustrates an example of the first elongated member Q1 and the second elongated member Q2. The machining path generator 1A executes processing (hereinafter, referred to as "preparation processing") of preparing an assembly model AM, which is a combination of a plurality of models M including a first model M1 (see FIG. 2) obtained by modeling the first elongated member Q1 and a second model M2 (see FIG. 2) obtained by modeling the second elongated member Q2. The assembly model AM may include a third model M3 (see FIG. 14) obtained by modeling a third elongated member. In other words, the number of models M in the assembly model AM may be two or may be three or more.

FIG. 2 illustrates a state where the assembly model AM prepared by the preparation processing is displayed on the display 5.

The preparation processing includes, for example, reading by the calculator 2, model data DA indicating the shape and arrangement of each of the plurality of models M. More specifically, the preparation processing includes reading by the calculator 2 executing the program P stored in the memory 3, a file F including the model data DA indicating the shape and arrangement of each of the plurality of models M from the memory 3. Alternatively or additionally, the preparation processing may include displaying by the calculation 2, the assembly model AM on the display 5 as in the example illustrated in FIG. 2. Alternatively or additionally, the preparation processing may include producing the assembly model AM that is a combination of the plurality of models M using software (for example, CAD software) executed by the calculator 2.

The model data DA indicating the shape and arrangement of each of the plurality of models M includes first model data DA1 indicating the shape and arrangement of the first model M1 (more specifically, the first model data DA1 indicating the shape of the first model M1 and the arrangement of the first model M1 in the assembly model AM) and second model data DA2 indicating the shape and arrangement of the second model M2 (more specifically, the second model data DA2 indicating the shape of the second model M2 and the arrangement of the second model M2 in the assembly model AM). Additionally, the model data DA may include third model data DA3 indicating the shape and arrangement of the third model M3 (see FIG. 14) (more specifically, the third model data DA3 indicating the shape of the third model M3 and the arrangement of the third model M3 in the assembly model AM).

In the example illustrated in FIG. 2, the model data DA indicating the shape and arrangement of each of the plurality of models M (for example, the first model data DA1 indicating the shape and arrangement of the first model M1 and the second model data DA2 indicating the shape and arrangement of the second model M2) is stored in the memory 3.

The model data DA indicating the shape and arrangement of each of the plurality of models M may be generated by the CAD device 91 different from the machining path generator 1A. In this case, the machining path generator 1A receives the model data DA indicating the shape and arrangement of each of the plurality of models M from the CAD device 91. The machining path generator 1A stores the received model data DA in the memory 3. Alternatively, the machining path generator 1A may receive the model data DA indicating the shape and arrangement of each of the plurality of models M from a portable memory such as a USB memory, and store the received model data DA in the memory 3.

In the example illustrated in FIG. 4, the machining path generator 1A executes first identification processing including identifying a second identifier ID2 that is an identifier of the second model M2 in response to selection of the first model M1 and the second model M2 adjacent to the first model M1 in the assembly model AM. In FIG. 4, the first model M1 with dot hatching indicates a state where the first model M1 is selected. The second model M2 with dashed lines indicates a state where the second model M2 is selected. In FIG. 4 and FIG. 5, the identifiers (ID1, ID2) are displayed on the display 5, but displaying of such identifiers may be omitted.

In the example illustrated in FIG. 4, the first model M1 includes a later-described first marking shape K1. In this case, in the first identification processing, an first identifier ID1, which is the identifier of the first model M1, may not necessarily need to be identified. Alternatively, as in the example illustrated in FIG. 14, when the first model M1 does not include the later-described first marking shape K1, the first identifier ID1, which is the identifier of the first model M1, is preferably identified in the first identification processing, as will be described in detail later.

In the example illustrated in FIG. 2, the second model data DA2 indicating the shape and arrangement of the second model M2 and the second identifier ID2, which is the identifier of the second model M2, are stored in the memory 3 in association with each other. In this case, the calculator 2 can easily identify the second identifier ID2 in response to selection of the second model M2.

In the example illustrated in FIG. 4 (or FIG. 14), the first model M1 is selected when the inputter 4 receives a first user input. For example, the first model M1 is selected when an image IG1 indicating the shape of the first model M1 displayed on the display 5 is clicked using a pointer such as a mouse. Alternatively, as in the example illustrated in FIG. 5, the first model M1 may be selected when an image IG2 indicating the data of the first model M1 displayed on the display 5 is clicked using a pointer such as a mouse.

In the example illustrated in FIG. 4 (or FIG. 14), the second model M2 adjacent to the first model M1 is selected when the inputter 4 receives a second user input. For example, the second model M2 is selected when an image IG3 indicating the shape of the second model M2 displayed on the display 5 is clicked using a pointer such as a mouse. Alternatively, as in the example illustrated in FIG. 5, the second model M2 may be selected when an image IG4 indicating the data of the second model M2 displayed on the display 5 is clicked using a pointer such as a mouse.

Still alternatively, the calculation 2 may automatically select the first model M1 and/or the second model M2 adjacent to the first model M1. For example, when the assembly model AM includes only two models M, the calculator 2 can automatically select the first model M1 and the second model M2 adjacent to the first model M1. When the calculator 2 automatically determines a model adjacent to the first model M1 in the plurality of models M, the calculator 2 can automatically select the first model M1 and the second model M2 adjacent to the first model M1. The calculator 2 may be configured to automatically select the second model M2 adjacent to the first model M1 in response to selection of the first model M1 by the user. When there are a plurality of models adjacent to the first model M1, for example, the calculator 2 may automatically select a model at a position near a position indicated by the user using the pointer (more specifically, a model at a position near a cursor on a screen operated using the pointer) as the second model M2 in the plurality of models adjacent to the first model M1.

In the example illustrated in FIG. 6, the machining path generator 1A executes processing (hereinafter, referred to as "first generation processing") of generating the first machining path T1 for producing the first elongated member Q1. More specifically, in the first generation processing, the first machining path T1 for producing the first elongated member Q1 is generated based at least on the first model M1 (for example, see FIG. 4) selected in the first identification processing and the second identifier ID2 (for example, see FIG. 4) identified by the first identification processing executed.

The first machining path means a path of a laser beam or a tool machining a first elongated workpiece W1 to produce the first elongated member Q1 from the first elongated workpiece W1 (for example, a path of a laser head 111 moving relative to the first elongated workpiece W1 to produce the first elongated member Q1 from the first elongated workpiece W1). Each of FIG. 6 and FIG. 7 schematically illustrates the first machining path T1 using dashed lines.

As in the example illustrated in FIG. 36, when the laser beam machine 101 includes a machining head 140 holding a tool such as a machining tool 141, the first machining path may include both a path of the laser beam for machining the first elongated workpiece W1 and a path of the tool such as the machining tool 141 for machining the first elongated workpiece W1. The calculator 2 stores first machining path data DP1 indicating the generated first machining path T1 in the memory 3 (see FIG. 9).

The first machining path T1 includes (1) a first engraving formation path TG1 (see FIG. 6 or FIG. 7) for forming first laser beam engraving LG1 (see FIG. 11) expressing the first identifier ID1, which is the identifier of the first model M1, on the first elongated member Q1 and (2) a second engraving formation path TG2 (see FIG. 6 or FIG. 7) for forming second laser beam engraving LG2 (see FIG. 11) expressing the second identifier ID2 identified by the above-described first identification processing executed, on the first elongated member Q1.

In the example illustrated in FIG. 4, the first model M1 is provided in advance with a first marking shape K1 expressing the first identifier ID1. In this case, the calculator 2 can generate the first engraving formation path TG1 (see FIG. 6 or FIG. 7) based on the first model M1 selected in the first identification processing. In the above-described example, in the first identification processing, the second identifier ID2 is identified. Thus, the calculator 2 can generate the second engraving formation path TG2 (see FIG. 6 or FIG. 7) based on the selected first model M1 and the identified second identifier ID2.

The first machining path T1 may include a first cutting path TC1 (see FIG. 7) for cutting out the first elongated member Q1 from the first elongated workpiece W1. The calculator 2 can generate the first cutting path TC1 (see FIG. 7) based on the first model M1 selected in the first identification processing.

The machining path generator 1A or the controller 7 generates a machining program PG based at least on the first machining path T1. The controller 7 generates the control command SA by executing the machining program PG. The controller 7 transmits the generated control command SA to the laser beam machine 101 (see FIG. 1).

The laser beam machine 101 operates based on the control command SA and irradiates the first elongated workpiece W1 with a laser beam to produce the first elongated member Q1 from the first elongated workpiece W1.

FIG. 11 illustrates the first elongated member Q1 and the second elongated member Q2 produced by the laser beam machine 101. As in the example illustrated in FIG. 11, the first elongated member Q1 produced by the laser beam machine 101 is provided with the first laser beam engraving LG1 identifying the first elongated member Q1 and the second laser beam engraving LG2 identifying the second elongated member Q2 arranged adjacent to the first elongated member Q1. Thus, the user can efficiently connect the first elongated member Q1 and the second elongated member Q2.

In the laser beam machining system 100A according to embodiment 1, in response to selection of the second model M2 adjacent to the first model M1, the second identifier ID2, which is the identifier of the second model M2, is identified. Thus, another laser beam engraving is prevented from being erroneously provided instead of the second laser beam engraving LG2. In other words, in the laser beam machining system 100A according to embodiment 1, the first elongated member Q1 can be precisely provided with laser beam engraving for efficiently connecting the first elongated member Q1 and the second elongated member Q2.

### (Optional Configurations)

Next, with reference to FIG. 1 to FIG. 38, optional configurations that can be adopted in the laser beam machining system 100A according to embodiment 1 will be described.

### (Machining Path Generator 1A)

The machining path generator 1A includes at least one computer. The machining path generator 1A may include the CAD/CAM device 10a. Note that CAD is an abbreviation for "computer aided design" and CAM is an abbreviation for "computer aided manufacturing". The CAD/CAM device 10a is capable of generating a parts drawing, and of generating a machining path (for example, the first machining path) based on the generated parts drawing.

In the example illustrated in FIG. 2, the machining path generator 1A (for example, the CAD/CAM device 10a) includes the calculator 2, the memory 3, the inputter 4, the display 5, and the communication circuit 6.

The calculator 2 includes at least one processor 2a (for example, at least one CPU). In the example illustrated in FIG. 2, the machining path generator 1A (more specifically, the calculator 2) executes the program P stored in the memory 3 to cause the calculator 2 to function as a model modification unit 21 and a machining path generation unit 23.

The memory 3 is a storage medium readable by the calculator 2. The memory 3 may be, for example, a non-volatile or volatile semiconductor memory such as a RAM, a ROM, or a flash memory, may be a magnetic disk, or may be a memory of another format. The memory 3 stores the program P and data.

The memory 3 may be dispersedly arranged at a plurality of locations. For example, a memory storing data and a memory storing the program P may be separately provided. The memory 3 may include a cloud storage accessible over a network.

The inputter 4 may include the keyboard 4k, may include the pointer 4p such as a mouse, and may include other devices (a touch panel on the display 5, for example).

In the example illustrated in FIG. 2, the calculator 2, the memory 3, the inputter 4, the display 5, and the communication circuit 6 are connected to each other via a bus 15.

In the example illustrated in FIG. 1, the machining path generator 1A is a device different from the controller 7. Alternatively, the controller 7 may function as the machining path generator 1A. Still alternatively, the CAD/CAM device 10a and the controller 7 may cooperate to function as the machining path generator 1A, and the CAD/CAM device 10a and the CAD device 91 may cooperate to function as the machining path generator 1A. The CAD/CAM device 10a, the controller 7, and the CAD device 91 may cooperate to function as the machining path generator 1A.

### (First Identification Processing)

The above-described first identification processing is executed by the calculator 2 executing the program P. In the example illustrated in FIG. 4 or FIG. 14, the above-described first identification processing includes identifying the first identifier ID1, which is the identifier of the first model M1, and the second identifier ID2, which is the identifier of the second model M2, by the calculator 2 in response to selection of the first model M1 and the second model M2 adjacent to the first model M1 in the assembly model AM. Preferably, the calculator 2 automatically identifies the first identifier ID1 and the second identifier ID2 in response to selection of the first model M1 and the second model M2 adjacent to the first model M1.

The first identifier ID1 is a code string identifying the first model M1, for example. The second identifier ID2 is a a code string identifying the second model M2, for example. The codes include characters, numbers, signs, and the like.

### (Modification of First Model M1)

In the examples illustrated in FIG. 14 to FIG. 18 (or FIG. 19 to FIG. 27), the machining path generator 1A can execute model modification processing including modifying the first model M1. The above-described first machining path T1 is generated based on a first model M1' (see FIG. 18 or FIG. 27) modified by the model modification processing executed.

The model modification processing is executed by the calculation 2 executing the program P. For example, the calculator 2 executes the program P to function as the model modification unit 21, and the model modification unit 21 executes the model modification processing including modifying the first model M1.

In the example illustrated in FIG. 18, the model modification processing includes adding the first marking shape K1 (more specifically, the first marking shape K1 corresponding to the shape of the first laser beam engraving LG1) expressing the first identifier ID1 identified by the first identification processing executed, to the first model M1. In other words, the first model M1' modified by the model modification processing executed includes the first marking shape K1 corresponding to the shape of the first laser beam engraving LG1.

As in the example illustrated in FIG. 4, when the first model M1 includes the first marking shape K1 in advance, the modification to add the first marking shape K1 to the first model M1 is omitted.

In the example illustrated in FIG. 18, the model modification processing includes adding a second marking shape K2 corresponding to the shape of the second laser beam engraving LG2 to the first model M1. In other words, the first model M1' modified by the model modification processing executed includes the second marking shape K2 corresponding to the shape of the second laser beam engraving LG2.

As in the example illustrated in FIG. 18, in the first model M1 (or a modified first model M1'), a region adjacent to the second model M2 (or a modified second model M2') is defined as a first region RG1. In the first model M1 (or the modified first model M1'), a region far from the second model M2 (or the modified second model M2') compared with the first region RG1 is defined as a second region RG2.

In the example illustrated in FIG. 18, the model modification processing includes adding the second marking shape K2 to the first region RG1 of the first model M1. In the example illustrated in FIG. 18, the model modification processing includes adding the first marking shape K1 to the second region RG2 of the first model M1.

When the second marking shape K2 is arranged in the first region RG1, the second laser beam engraving LG2 is formed at a position near a connection position between the first elongated member Q1 and the second elongated member Q2 (see FIG. 11). Thus, the user connecting the first elongated member Q1 and the second elongated member Q2 can easily check whether the connection has failed or not.

As in the example illustrated in FIG. 11, laser beam engraving designating the connection position of the first elongated member Q1 to the second elongated member Q2 is defined as third laser beam engraving LG3.

In the example illustrated in FIG. 18, the model modification processing includes adding a third marking shape K3 corresponding to the shape of the third laser beam engraving LG3 to the first model M1 (more specifically, the first region RG1 of the first model M1). In other words, the first model M1' modified by the model modification processing executed includes the third marking shape K3 corresponding to the shape of the third laser beam engraving LG3.

When the third marking shape K3 is added to the first model M1, the third laser beam engraving LG3 (see FIG. 11) designating the connection position of the first elongated member Q1 to the second elongated member Q2 is formed on the first elongated member Q1. Thus, the user can position the first elongated member Q1 with respect to the second elongated member Q2 while referring to the third laser beam engraving LG3.

In this specification, a direction parallel to the longitudinal direction of the second elongated member Q2 (or the longitudinal direction of the second model M2) is defined as a first direction DR1. In the example illustrated in FIG. 18, the third marking shape K3 includes a first arrow K3-1 uniquely designating the connection position of the first elongated member Q1 to the second elongated member Q2 in the direction parallel to the first direction DR1. The first arrow K3-1 precisely designates the connection position of the first elongated member Q1 to the second elongated member Q2.

When the third marking shape K3 includes the first arrow K3-1, as in the example illustrated in FIG. 11 and FIG. 12, the third laser beam engraving LG3 includes first arrow engraving LG3-1 precisely designating the connection position of the first elongated member Q1 to the second elongated member Q2. Thus, the user can position the first elongated member Q1 with respect to the second elongated member Q2 while referring to the tip of the first arrow engraving LG3-1.

### (Modification of Second Model M2)

In the examples illustrated in FIG. 14 to FIG. 18 (or FIG. 19 to FIG. 27), the model modification processing includes modifying the second model M2 in addition to modifying the first model M1. The later-described second machining path T2 is generated based on a second model M2' (see FIG. 18 or FIG. 27) modified by the model modification processing executed.

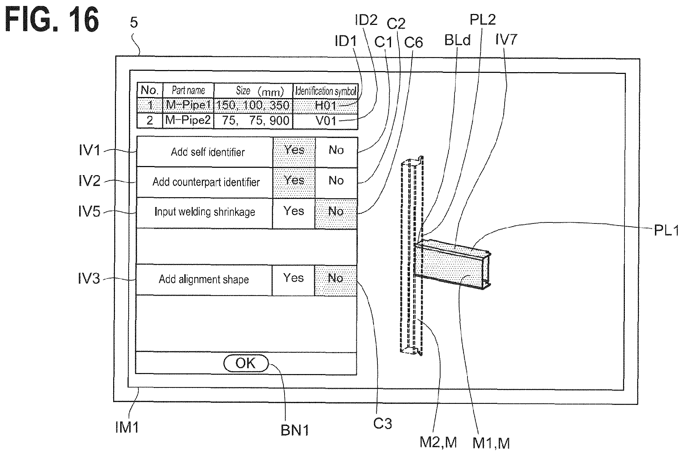

In the example illustrated in FIG. 18, the model modification processing includes adding a fourth marking shape K4 expressing the second identifier ID2 (see FIG. 16) identified by the first identification processing executed, to the second model M2. The fourth marking shape K4 corresponds to the shape of fourth laser beam engraving LG4 (see FIG. 11). In the example illustrated in FIG. 18, the second model M2' modified by the model modification processing executed includes the fourth marking shape K4 corresponding to the shape of the fourth laser beam engraving LG4.

As in the example illustrated in FIG. 4, when the second model M2 includes the fourth marking shape K4 in advance, the modification to add the fourth marking shape K4 to the second model M2 is omitted.

In the example illustrated in FIG. 18, the model modification processing includes adding a fifth marking shape K5 expressing the first identifier ID1 (see FIG. 16) identified by the first identification processing executed, to the second model M2. The fifth marking shape K5 corresponds to the shape of fifth laser beam engraving LG5 (see FIG. 11). In other words, the second model M2' modified by the model modification processing executed includes the fifth marking shape K5 corresponding to the shape of the fifth laser beam engraving LG5.

As in the example illustrated in FIG. 18, in the second model M2 (or the modified second model M2'), a region adjacent to the first model M1 (or the modified first model M1') is defined as a fourth region RG4. In the second model M2 (or the modified second model M2'), a region far from the first model M1 (or the modified first model M1') compared with the fourth region RG4 is defined as a fifth region RG5.

In the example illustrated in FIG. 18, the model modification processing includes adding the fifth marking shape K5 to the fourth region RG4 of the second model M2. In the example illustrated in FIG. 18, the model modification processing includes adding the fourth marking shape K4 to the fifth region RG5 of the second model M2.

When the fifth marking shape K5 is arranged in the fourth region RG4, the fifth laser beam engraving LG5 is formed at a position near a connection position between the first elongated member Q1 and the second elongated member Q2 (see FIG. 11). Thus, the user connecting the first elongated member Q1 and the second elongated member Q2 can easily check whether the connection has failed or not.

As in the example illustrated in FIG. 11, laser beam engraving designating the connection position of the second elongated member Q2 to the first elongated member Q1 is defined as sixth laser beam engraving LG6.

In the example illustrated in FIG. 18, the model modification processing includes adding a sixth marking shape K6 corresponding to the shape of the sixth laser beam engraving LG6 to the second model M2 (more specifically, the fourth region RG4 of the second model M2). In other words, the second model M2' modified by the model modification processing executed includes the sixth marking shape K6 corresponding to the shape of the sixth laser beam engraving LG6.

When the sixth marking shape K6 is added to the second model M2, the sixth laser beam engraving LG6 (see FIG. 11) designating the connection position of the second elongated member Q2 to the first elongated member Q1 is formed in the second elongated member Q2. Thus, the user can position the second elongated member Q2 with respect to the first elongated member Q1 while referring to the sixth laser beam engraving LG6.

In the example illustrated in FIG. 18, the sixth marking shape K6 includes a second arrow K6-1 uniquely designating the connection position of the second elongated member Q2 to the first elongated member Q1 in a direction parallel to the first direction DR1. The second arrow K6-1 precisely designates the connection position of the second elongated member Q2 to the first elongated member Q1.

When the sixth marking shape K6 includes the second arrow K6-1, as in the example illustrated in FIG. 11 and FIG. 12, the sixth laser beam engraving LG6 includes second arrow engraving LG6-1 precisely designating the connection position of the second elongated member Q2 to the first elongated member Q1. Thus, the user can position the second elongated member Q2 with respect to the first elongated member Q1 while referring to the tip of the second arrow engraving LG6-1. More specifically, by arranging the first elongated member Q1 and the second elongated member Q2 with the position of the tip of the first arrow engraving LG3-1 being substantially the same as the position of the tip of the second arrow engraving LG6-1, the positioning between the first elongated member Q1 and the second elongated member Q2 is favorably implemented.

### (Second Identification Processing)

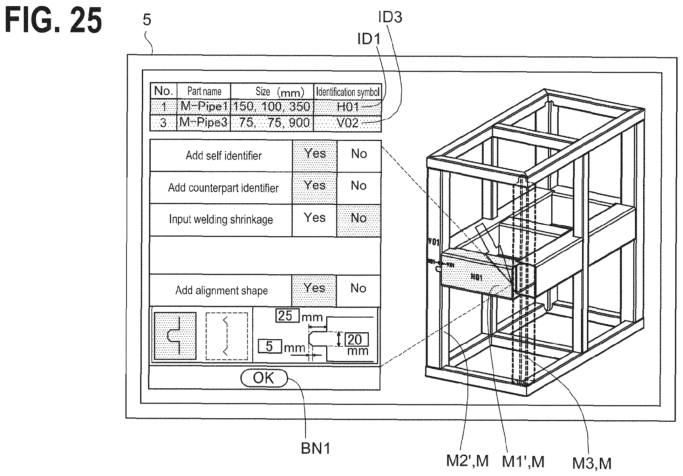

In the examples illustrated in FIG. 24 and FIG. 25, the machining path generator 1A executes second identification processing including identifying the first identifier ID1, which is the identifier of the first model M1, and a third identifier ID3 that is an identifier of the third model M3 in response to selection of the first model M1 (for example, the modified first model M1') and the third model M3 adjacent to the first model M1 (for example, the modified first model M1') in the assembly model AM. In FIG. 24 and FIG. 25, the first model M1 (for example, the modified first model M1') with dot hatching indicates a state where the first model M1 (for example, the modified first model M1') is selected. The third model M3 with dashed lines indicates a state where the third model M3 is selected.

In the examples illustrated in FIG. 24 and FIG. 25, the first model M1 (for example, the modified first model M1') is selected when the inputter 4 receives a third user input. The third model M3 adjacent to the first model M1 (for example, the modified first model M1') is selected when the inputter 4 receives a fourth user input. Alternatively, the first model M1 (for example, the modified first model M1') and the third model M3 adjacent to the first model M1 (for example, the modified first model M1') may be automatically selected by the calculator 2. When there are a plurality of models adjacent to the first model M1, for example, the calculator 2 may automatically select a model at a position near a position indicated by the user using the pointer (more specifically, a model at a position near a cursor on a screen operated using the pointer) as the third model M3 in the plurality of models adjacent to the first model M1.

### (Further Modification of First Model M1)

In the examples illustrated in FIG. 19 to FIG. 27, the model modification processing includes adding a seventh marking shape K7 (see FIG. 27) expressing the third identifier ID3, which is the identifier of the third model M3 (more specifically, the third identifier ID3 identified by the second identification processing executed), to the first model M1. The seventh marking shape K7 corresponds to the shape of seventh laser beam engraving LG7 (see FIG. 28). In the example illustrated in FIG. 27, the first model M1' modified by the model modification processing executed includes the seventh marking shape K7 corresponding to the shape of the seventh laser beam engraving LG7.

As in the example illustrated in FIG. 27, in the first model M1 (or the modified first model M1'), a region adjacent to the se third model M3 (or a modified third model M3') is defined as a third region RG3. The third region RG3 is a region near the third model M3 (or the modified third model M3') compared with the above-described second region RG2.

In the example illustrated in FIG. 27, the model modification processing includes adding the seventh marking shape K7 to the third region RG3 of the first model M1.

When the seventh marking shape K7 is arranged in the third region RG3, the seventh laser beam engraving LG7 is formed at a position near a connection position between the first elongated member Q1 and the third elongated member Q3 (see FIG. 28). Thus, the user connecting the first elongated member Q1 and the third elongated member Q3 can easily check whether the connection has failed or not.

As in the example illustrated in FIG. 28, laser beam engraving designating the connection position of the first elongated member Q1 to the third elongated member Q3 is defined as eighth laser beam engraving LG8.

In the example illustrated in FIG. 27, the model modification processing includes adding an eighth marking shape K8 corresponding to the shape of the eighth laser beam engraving LG8 to the first model M1 (more specifically, the third region RG3 of the first model M1). In other words, the first model M1' modified by the model modification processing executed includes the eighth marking shape K8 corresponding to the shape of the eighth laser beam engraving LG8.

When the eighth marking shape K8 is added to the first model M1, the eighth laser beam engraving LG8 (see FIG. 28) designating the connection position of the first elongated member Q1 to the third elongated member Q3 is formed on the first elongated member Q1. Thus, the user can position the first elongated member Q1 with respect to the third elongated member Q3 while referring to the eighth laser beam engraving LG8.

In the example illustrated in FIG. 27, the eighth marking shape K8 includes a third arrow K8-1 precisely designating the connection position of the first elongated member Q1 to the third elongated member Q3.

### (Modification of Third Model M3)

In the examples illustrated in FIG. 19 to FIG. 27, the model modification processing includes modifying the third model M3.

In the example illustrated in FIG. 27, the model modification processing includes adding a ninth marking shape K9 expressing the third identifier ID3, which is the identifier of the third model M3 (more specifically, the third identifier ID3 identified by the second identification processing executed), to the third model M3. The ninth marking shape K9 corresponds to the shape of ninth laser beam engraving LG9 (see FIG. 28).

When the third model M3 includes the ninth marking shape K9 in advance, the modification to add the ninth marking shape K9 to the third model M3 is omitted.

In the example illustrated in FIG. 27, the model modification processing includes adding the tenth marking shape K10 expressing the first identifier ID1, which is the identifier of the first model M1 (more specifically, the first identifier ID1 identified by the second identification processing executed), to the third model M3. The tenth marking shape K10 corresponds to the shape of tenth laser beam engraving LG10 (see FIG. 28).

As in the example illustrated in FIG. 28, laser beam engraving designating the connection position of the third elongated member Q3 to the first elongated member Q1 is defined as eleventh laser beam engraving LG11.

In the example illustrated in FIG. 27, the model modification processing includes adding an eleventh marking shape K11 corresponding to the shape of the eleventh laser beam engraving LG11 to the third model M3.

In the example illustrated in FIG. 27, the eleventh marking shape K11 includes a fourth arrow K11-1 precisely designating the connection position of the third elongated member Q3 to the first elongated member Q1.

### (First Generation Processing)

In the example illustrated in FIG. 33, the calculator 2 (more specifically, the machining path generation unit 23 of the calculator 2) executing the program P executes the first generation processing of generating the first machining path for producing the first elongated member Q1. More specifically, the calculator 2 generates the first machining path for producing the first elongated member Q1 based on the first model M1' (for example, see FIG. 18 or FIG. 27) modified by the above-described model modification processing executed. The calculator 2 stores the first machining path data DP1 indicating the generated first machining path in the memory 3 (see FIG. 33).

In the example illustrated in FIG. 34, the first machining path T1 includes (1) the first engraving formation path TG1 for forming the first laser beam engraving LG1 (see FIG. 28) expressing the first identifier ID1, which is the identifier of the first model M1 (more specifically, the first identifier ID1 identified by the above-described first identification processing executed), on the first elongated member Q1, (2) the second engraving formation path TG2 for forming the second laser beam engraving LG2 (see FIG. 28) expressing the second identifier ID2, which is the identifier of the second model M2 (more specifically, the second identifier ID2 identified by the above-described first identification processing executed), on the first elongated member Q1, and (3) the first cutting path TC1 for cutting out the first elongated member Q1 from the first elongated workpiece W1.

The first machining path T1 may include third engraving formation path TG3 for forming the third laser beam engraving LG3 (more specifically, the first arrow engraving LG3-1 illustrated in FIG. 28) designating the connection position of the first elongated member Q1 to the second elongated member Q2, on the first elongated member Q1.

The first machining path T1 may include a seventh engraving formation path TG7 for forming the seventh laser beam engraving LG7 (see FIG. 28) expressing the third identifier ID3, which is the identifier of the third model M3 (more specifically, the third identifier ID3 identified by the above-described second identification processing executed), on the first elongated member Q1.

The first machining path T1 may include an eighth engraving formation path TG8 for forming the eighth laser beam engraving LG8 (more specifically, arrow engraving) designating the connection position of the first elongated member Q1 to the third elongated member Q3, on the first elongated member Q1.

### (Second Generation Processing)

In the example illustrated in FIG. 33, the calculator 2 (more specifically, the machining path generation unit 23 of the calculator 2) executing the program P executes second generation processing of generating the second machining path for producing the second elongated member Q2. More specifically, the calculator 2 generates the second machining path for producing the second elongated member Q2 based on the second model M2' (for example, see FIG. 18 or FIG. 27) modified by the above-described model modification processing executed. The calculator 2 stores the second machining path data DP2 indicating the generated second machining path in the memory 3 (see FIG. 33).

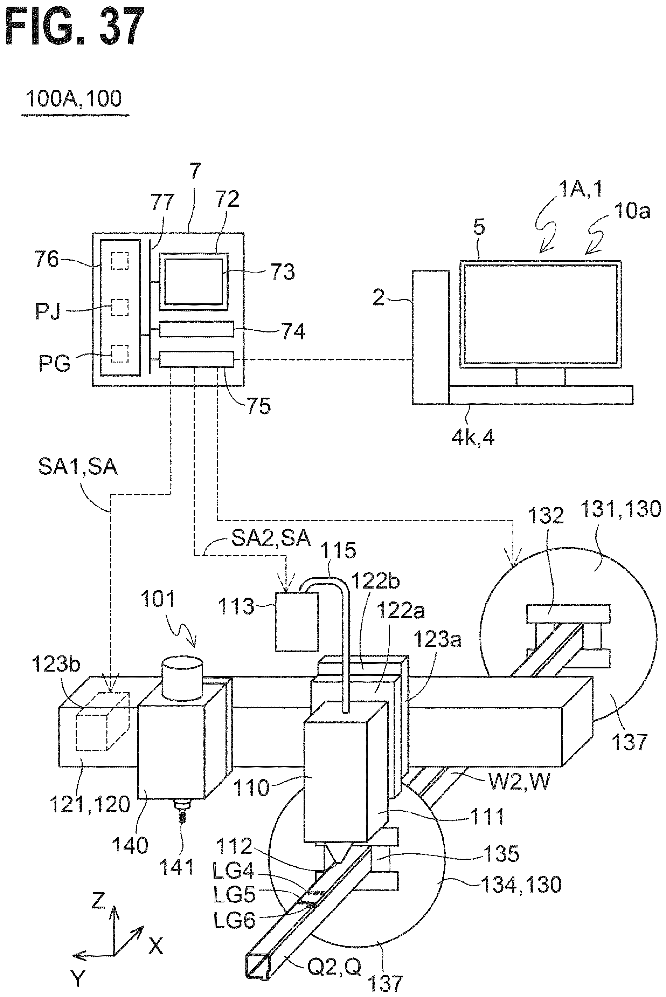

The second machining path means a path of a laser beam or a tool machining the second elongated workpiece W2 to produce the second elongated member Q2 from the second elongated workpiece W2 (for example, a path of the laser head 111 moving relative to the second elongated workpiece W2 to produce the second elongated member Q2 from the second elongated workpiece W2). As in the example illustrated in FIG. 37, when the laser beam machine 101 includes the machining head 140 holding a tool such as a machining tool 141, the second machining path may include both a path of the laser beam for machining the second elongated workpiece W2 and a path of the tool such as the machining tool 141 for machining the second elongated workpiece W2.

In the example illustrated in FIG. 37, the second elongated workpiece W2 is a workpiece different from the first elongated workpiece W1. Alternatively, the second elongated workpiece W2 may be the same as the first elongated workpiece W1 In other words, in the description in the previous paragraph, the "second elongated workpiece W2" may be replaced with "the first elongated workpiece W1, or the second elongated workpiece W2 different from the first elongated workpiece W1".

In the example illustrated in FIG. 35, the second machining path T2 includes (1) a fourth engraving formation path TG4 for forming the fourth laser beam engraving LG4 (see FIG. 28) expressing the second identifier ID2, which is the identifier of the second model M2 (more specifically, the second identifier ID2 identified by the above-described first identification processing executed), on the second elongated member Q2, (2) a fifth engraving formation path TG5 for forming the fifth laser beam engraving LG5 (see FIG. 28) expressing the first identifier ID1, which is the identifier of the first model M1 (more specifically, the first identifier ID1 identified by the above-described first identification processing executed), on the second elongated member Q2, and (3) a second cutting path TC2 for cutting out the second elongated member Q2 from the first elongated workpiece W1, or the second elongated workpiece W2 different from the first elongated workpiece W1.

The second machining path T2 may include a sixth engraving formation path TG6 for forming the sixth laser beam engraving LG6 (see FIG. 28) designating the connection position of the second elongated member Q2 to the first elongated member Q1, on the second elongated member Q2. In the example illustrated in FIG. 35, the sixth engraving formation path TG6 includes a machining path for forming the second arrow engraving LG6-1 (see FIG. 28) on the second elongated member Q2.

Alternatively or additionally, as in the example illustrated in FIG. 8, the sixth engraving formation path TG6 may include a machining path for forming first linear engraving LG6-2 (see FIG. 11) on the second elongated member Q2.

### (Controller 7)

The controller 7 controls the laser beam machine 101. In the example illustrated in FIG. 36, the controller 7 includes a display 72, an inputter 73 (for example, a touch panel on the display 72), a calculator 74, a communication circuit 75, and a memory 76. In the example illustrated in FIG. 36, the memory 76 stores the machining program PG generated based at least on the first machining path T1. The machining program PG stored in the memory 76 may be a program generated based on the first machining path T1 and the second machining path T2.

The controller 7 (more specifically, the calculator 74) generates the control command SA by executing the machining program PG. In this specification, execution of the machining program PG by the controller 7 (more specifically, the calculator 74) includes execution of the machining program PG by the controller 7 (more specifically, the calculator 74) via a calculation program PJ. In other words, the controller 7 (more specifically, the calculator 74) may execute the calculation program PJ to process (in other words, interpret) the machining program PG.

In the example illustrated in FIG. 36, the display 72, the inputter 73, the calculator 74, the communication circuit 75, and the memory 76 are connected to each other via a bus 77.

The laser beam machine 101 operates based on the control command SA generated as a result of execution of the machining program PG by the controller 7 (more specifically, the calculator 74). More specifically, the communication circuit 75 transmits the control command SA to the laser beam machine 101, and the laser beam machine 101 receiving the control command SA operates based on the control command SA. The control command SA includes a plurality of commands such as a movement command SA1 causing movement of the laser head 111 and an emission command SA2 causing emission of a laser beam from the laser head 111.

In the example illustrated in FIG. 36, the laser beam machine 101 operates based on the control command SA and irradiates the first elongated workpiece W1 with a laser beam to produce the first elongated member Q1 from the first elongated workpiece W1.

In the example illustrated in FIG. 37, the laser beam machine 101 operates based on the control command SA and irradiates the second elongated workpiece W2 with a laser beam to produce the second elongated member Q2 from the second elongated workpiece W2.

### (Laser Beam Machine 101)

In the example illustrated in FIG. 36, the laser beam machine 101 includes a laser beam emitter 110 including the laser head 111, a mover 120, and a workpiece supporter 130.

In the example illustrated in FIG. 36, the workpiece supporter 130 includes a first chuck 131 and a second chuck 134. The first chuck 131 and the second chuck 134 support an elongated workpiece (for example, the first elongated workpiece W1).

The first chuck 131 may include a holding member 132 capable of holding the elongated workpiece (for example, the first elongated workpiece W1). The first chuck 131 may be movable in a direction parallel to the X axis together with the elongated workpiece (for example, the first elongated workpiece W1). In the example illustrated in FIG. 36, the X axis is an axis parallel to the longitudinal direction of the elongated workpiece (for example, the first elongated workpiece W1) held by the first chuck 131.

The second chuck 134 may include a plurality of guide rollers 135 for clamping the elongated workpiece (for example, the first elongated workpiece W1). The plurality of guide rollers 135 guide the movement of the elongated workpiece (for example, the first elongated workpiece W1) in the direction parallel to the X axis.

In the example illustrated in FIG. 36, the workpiece supporter 130 may include a rotational driver 137 causing rotation of the elongated workpiece (for example, the first elongated workpiece W1) about the axis parallel to the longitudinal direction of the elongated workpiece.

The mover 120 moves the laser head 111 relative to the workpiece supporter 130.

In the example illustrated in FIG. 36, the mover 120 includes a first mover 121 for moving the laser head 111. The mover 120 may include a workpiece mover for moving the elongated workpiece (for example, the first elongated workpiece W1) (more specifically, a motor for moving the elongated workpiece in a direction parallel to the X axis).

In the example illustrated in FIG. 36, the first mover 121 includes moving bodies (122a; 123a) for supporting the laser head 111 and drivers (122b; 123b) for moving the moving bodies (122a; 123a).

The first mover 121 may include the first moving body 122a and the first driver 122b for moving the first moving body 122a in a direction parallel to the Z axis. In the example illustrated in FIG. 36, the first moving body 122a can directly or indirectly support the laser head 111 and move in the direction parallel to the Z axis together with the laser head 111. The Z axis is an axis orthogonal to the X axis. In the example illustrated in FIG. 36, the Z axis is an axis parallel to the vertical direction.

The first mover 121 may include the second moving body 123a and the second driver 123b for moving the second moving body 123a in a direction parallel to the Y axis. In the example illustrated in FIG. 36, the second moving body 123a can directly or indirectly support the laser head 111 and move in the direction parallel to the Y axis together with the laser head 111. The Y axis is an axis orthogonal to both the X axis and the Z axis. In the example illustrated in FIG. 36, the Y axis is an axis parallel to the horizonal plane.

The laser beam emitter 110 includes the laser head 111, a laser beam light source 113, and an optical component 115 (such as, for example, an optical fiber) through which a laser beam is transmitted from the laser beam light source 113 to the laser head 111. The laser head 111 includes a laser beam emission port 112 through which the laser beam is emitted.

As in the example illustrated in FIG. 38, the laser beam machine 101 may include a carry-in part 103, a laser beam machining unit 105, and a carry-out part 107. The elongated workpiece (for example, the first elongated workpiece W1) carried into the carry-in part 103 is conveyed to the laser beam machining unit 105 by a mover such as the workpiece mover. A member such as the first elongated member Q1 produced from the elongated workpiece (for example, the first elongated workpiece W1) is conveyed to the carry-out part 107 from the laser beam machining unit 105 by any conveyance device such as a conveyer.

### (Laser Beam Machining System 100A)

In the example illustrated in FIG. 38, the laser beam machining system 100A includes the machining path generator 1A (more specifically, the CAD/CAM device 10a), the controller 7, and the laser beam machine 101. In the example illustrated in FIG. 38, the machining path generator 1A (more specifically, the CAD/CAM device 10a) and the controller 7 are connected through a wire LN or wirelessly, to be capable of exchanging information.

The machining path generator 1A generates the first machining path described above. The machining path generator 1A may generate the second machining path described above. The machining path generator 1A may generate the machining program PG based at least on the first machining path. In the example illustrated in FIG. 38, the machining path generator 1A can transmit the machining program PG to the controller 7 through the wire LN or wirelessly. The controller 7 stores the machining program PG received from the machining path generator 1A in the memory 76. Alternatively, the controller 7 may generate the machining program PG based at least on the first machining path. In this case, the first machining path generated by the machining path generator 1A may be transmitted to the controller 7 through the wire LN or wirelessly, and the controller 7 may generate the machining program PG based at least on the first machining path. The machining program PG generated is stored in the memory 76.

Alternatively, information may be exchanged between the machining path generator 1A and the controller 7 using a portable memory (for example, a USB memory).

In the example illustrated in FIG. 38, the controller 7 is disposed at a location where the laser beam machine 101 is disposed. More specifically, the controller 7 and the laser beam machine 101 are disposed in the same work room SP1. The controller 7 may be attached to the laser beam machine 101 (for example, an outer wall of the laser beam machine 101). In the example illustrated in FIG. 38, the machining path generator 1A is disposed in a room (more specifically, office space SP2) different from the work room SP1, where the laser beam machine 101 is disposed.

### (Embodiment 2)

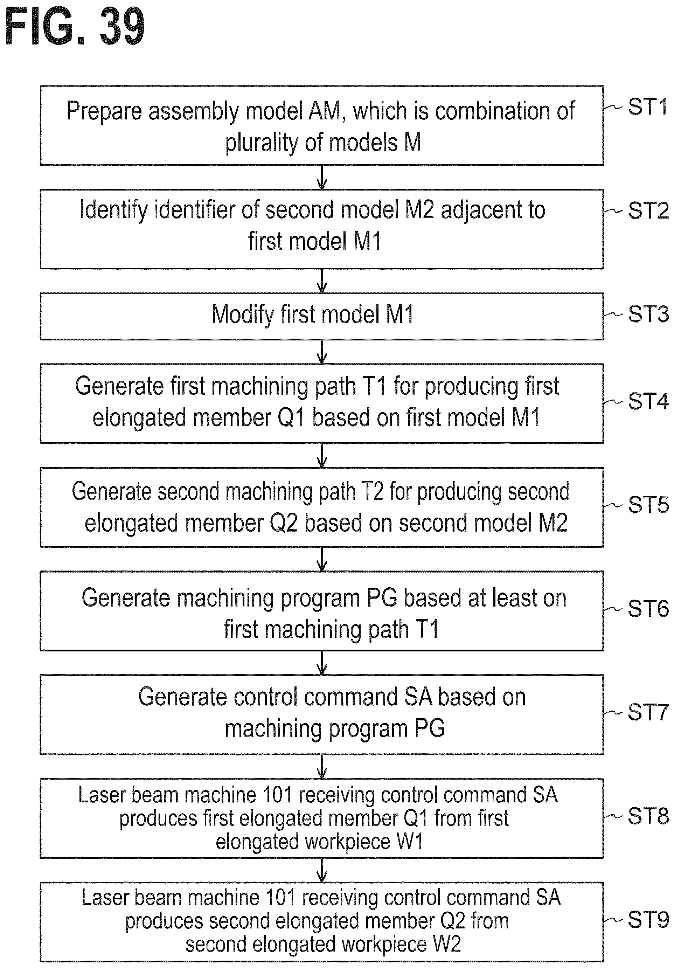

A machining path generation method and a laser beam machining method according to embodiment 2 will be described with reference to FIG. 1 to FIG. 39. FIG. 39 is a flowchart illustrating an example of the laser beam machining method according to embodiment 2.

In embodiment 2, points different from embodiment 1 will be mainly described. Meanwhile, redundant description on matters described in embodiment 1 will be omitted in embodiment 2. Thus, it is a matter of course that matters described in embodiment 1 are applicable to embodiment 2 even if such matters are not clearly described in embodiment 2. Conversely, the respects described in embodiment 2 are applicable to embodiment 1.

The machining path generation method according to embodiment 2 may be performed using the machining path generator 1A (for example, the CAD/CAM device 10a) or the laser beam machining system 100A in embodiment 1 or may be performed using other machining path generators or laser beam machining systems.

In a first step ST1, the assembly model AM that is a combination of a plurality of models M is prepared. The first step ST1 is a preparation process. In the example illustrated in FIG. 4, FIG. 14, or FIG. 19, the assembly model AM prepared in the preparation process includes the first model M1 obtained by modeling the first elongated member Q1 and the second model M2 obtained by modeling the second elongated member Q2. As in the example illustrated in FIG. 14 or FIG. 19, the assembly model AM prepared in the preparation process may include the third model M3 obtained by modeling the third elongated member Q3.

The preparation process (first step ST1) includes, for example, reading by the machining path generator 1 (for example, the CAD/CAM device 10a), the model data DA indicating the shape and arrangement of each of the plurality of models M (more specifically, the model data DA indicating the shape of each of the plurality of models M and the arrangement of each of the plurality of models M in the assembly model AM). More specifically, the preparation process (first step ST1) includes reading the file F including the model data DA indicating the shape and arrangement of each of the plurality of models M from the memory 3 by the calculator 2, which executes the program P stored in the memory 3.

Alternatively or additionally, the preparation process (first step ST1) may include displaying the assembly model AM on the display 5 by the calculator 2 as in the example illustrated in FIG. 4, FIG. 14, or FIG. 19. Alternatively or additionally, the preparation process (first step ST1) may include producing the assembly model AM that is a combination of a plurality of models M using software (for example, CAD software) executed by the calculator 2.

As in the example illustrated in FIG. 14, the preparation process (first step ST1) may include displaying on the display 5 by the calculator 2, an image IU for receiving an input of data (for example, the name of the first model M1, the first identifier ID1 identifying the first model M1) identifying each of the plurality of models M. In the example illustrated in FIG. 14, in response to an input of the data to a first input window Cb displayed on the display 5, the calculator 2 registers the data input to the first input window Cb as the first identifier ID1 identifying the first model M1. When the model data DA includes data identifying each of the plurality of models M, the displaying of the first input window Cb may be omitted.

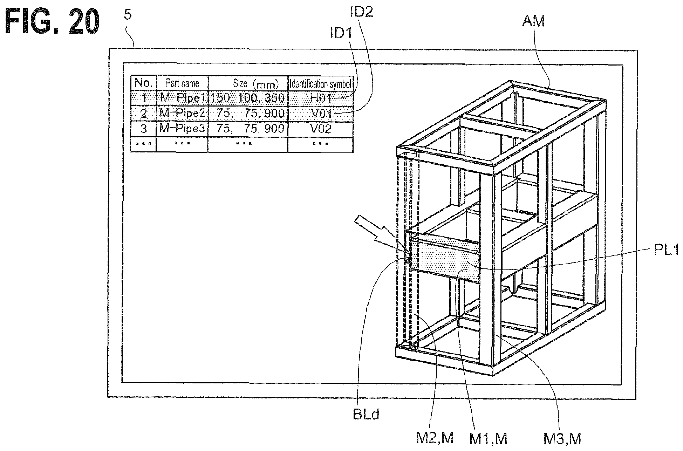

In a second step ST2, the first identification processing including identifying the second identifier ID2, which is the identifier of the second model M2 (for example, see FIG. 20), is executed. The second step ST2 is a first identification process. The first identification process (or the first identification processing) may include identifying the first identifier ID1, which is the identifier of the first model, and identifying the second identifier ID2, which is the identifier of the second model M2, by the calculator 2 in response to selection of the first model M1 and the second model M2 adjacent to the first model M1 in the assembly model AM.

In the example illustrated in FIG. 4, FIG. 14, or FIG. 19, in response to selection of the first model M1 and the second model M2 adjacent to the first model M1 based on a user input on the inputter 4, the calculator 2 automatically identifies the first identifier ID1 and the second identifier ID2.

In the example illustrated in FIG. 4, FIG. 14, or FIG. 19, the first model M1 and the second model M2 adjacent to the first model M1 are selected when the inputter 4 receives a user input. For example, the first model M1 is selected when the image IG1 indicating the shape of the first model M1 displayed on the display 5 is clicked using a pointer such as a mouse, and the second model M2 is selected when the image IG3 indicating the shape of the second model M2 displayed on the display 5 is clicked using a pointer such as a mouse.

Alternatively, the first model M1 and/or the second model M2 adjacent to the first model M1 may be automatically selected by the calculator 2. For example, when the calculator 2 automatically determines a model adjacent to the first model M1 in the plurality of models M, the calculator 2 can automatically select the first model M1 and the second model M2 adjacent to the first model M1. The calculator 2 may be configured to automatically select the second model M2 adjacent to the first model M1 in response to selection of the first model M1 by the user. When there are a plurality of models adjacent to the first model M1 for example, the calculator 2 may automatically select a model at a position near a position indicated by the user using the pointer (more specifically, a model at a position near a cursor on a screen operated using the pointer) as the second model M2 in the plurality of models adjacent to the first model M1.

In a third step ST3, at least one model M including the first model M1 is modified. The third step ST3 is a model modification process. The model modification process will be described later. The model modification process (third step ST3) may be omitted.

In a fourth step ST4, the first machining path for producing the first elongated member Q1 is generated. The fourth step ST4 is a first generation process. The first generation process (fourth step ST4) is executed by the machining path generator 1 (more specifically, the calculator 2 executing the program P).

In the first generation process (fourth step ST4), the first machining path for producing the first elongated member Q1 (for example, see FIG. 6 or FIG. 7) is generated based at least on the first model M1 (for example, see FIG. 4) selected in the first identification processing and the second identifier ID2 (for example, see FIG. 4) identified by the first identification processing executed. The first machining path T1 is already described in embodiment 1. Thus, redundant description on the first machining path T1 will be omitted.

In the example illustrated in FIG. 6, FIG. 7, or FIG. 34, the first machining path T1 includes (1) the first engraving formation path TG1 for forming the first laser beam engraving LG1 (see FIG. 11 or FIG. 28) expressing the first identifier ID1, which is the identifier of the first model M1 (more specifically, the first identifier ID1 identified by the above-described first identification processing executed), on the first elongated member Q1 and (2) the second engraving formation path TG2 for forming the second laser beam engraving LG2 (see FIG. 11 or FIG. 28) expressing the second identifier ID2 identified by the above-described first identification processing executed, on the first elongated member Q1.

As in the example illustrated in FIG. 7 or FIG. 34, the first machining path T1 may include the first cutting path TC1 for cutting out the first elongated member Q1 from the first elongated workpiece W1.

In a fifth step ST5, the second machining path for producing the second elongated member Q2 is generated. The fifth step ST5 is a second generation process. The second generation process (fifth step ST5) is executed by the machining path generator 1 (more specifically, the calculator 2 executing the program P). The first generation process (fourth step ST4) and the second generation process (fifth step ST5) may be sequentially executed by the machining path generator 1.

In the second generation process (fifth step ST5), the second machining path T2 (for example, see FIG. 8) for producing the second elongated member Q2 is generated based at least on the second model M2 (for example, see FIG. 4) selected in the first identification processing and the first identifier ID1 (for example, see FIG. 4) identified by the first identification processing executed. The second machining path T2 is already described in embodiment 1. Thus, redundant description on the second machining path T2 will be omitted.

In the example illustrated in FIG. 8 or FIG. 35, the second machining path T2 includes (1) the fourth engraving formation path TG4 for forming the fourth laser beam engraving LG4 (see FIG. 11 of FIG. 28) expressing the second identifier ID2, which is the identifier of the second model M2 (more specifically, the second identifier ID2 identified by the above-described first identification processing executed), on the second elongated member Q2 and (2) the fifth engraving formation path TG5 for forming the fifth laser beam engraving LG5 (see FIG. 11 or FIG. 28) expressing the first identifier ID1 identified by the above-described first identification processing executed on the second elongated member Q2.

As in the example illustrated in FIG. 8 or FIG. 35, the second machining path T2 may include the second cutting path TC2 for cutting out the second elongated member Q2 from the first elongated workpiece W1 or the second elongated workpiece W2 different from the first elongated workpiece W1.

The second generation process (fifth step ST5) may be executed before the first generation process (fourth step ST4) is executed, after the first generation process (fourth step ST4) is executed, or in parallel with the first generation process (fourth step ST4). The second generation process (fifth step ST5) may be omitted.

The laser beam machining method according to embodiment 2 at least includes, in addition to the above-described first step ST1, the above-described second step ST2, and the above-described fourth step ST4, (1) generating the machining program PG based at least on the above-described first machining path, (2) generating the control command SA by the controller 7 executing the machining program PG, and (3) producing the first elongated member Q1 from the first elongated workpiece W1 by the laser beam machine 101 receiving the control command SA and irradiating the first elongated workpiece W1 with a laser beam. Additionally, the laser beam machining method according to embodiment 2 may include (4) producing the second elongated member Q2 from the first elongated workpiece W1 or the second elongated workpiece W2 different from the first elongated workpiece, by the laser beam machine 101 receiving the control command SA and irradiating the first elongated workpiece W1 or the second elongated workpiece W2 different from the first elongated workpiece with a laser beam.

In the machining path generation method according to embodiment 2 (or the laser beam machining method according to embodiment 2), the second identifier ID2, which is the identifier of the second model M2, is identified in response to selection of the second model M2 adjacent to the first model M1. The first machining path T1 is generated including the second engraving formation path TG2 for forming the second laser beam engraving LG2 expressing the identified second identifier ID2 on the first elongated member Q1. Thus, another laser beam engraving is prevented from being erroneously provided instead of the second laser beam engraving LG2. In other words, embodiment 2 provides the machining path generation method (or laser beam machining method) enabling the first elongated member Q1 to be precisely provided with the laser beam engraving for efficiently connecting the first elongated member Q1 and the second elongated member Q2.

### (Optional Configurations)

Next, with reference to FIG. 1 to FIG. 39, optional configurations that can be adopted in the machining path generation method and the laser beam machining method according to embodiment 2 will be described.

### (Machining Path Generator 1A, Laser Beam Machining System 100A)

The above-described first step ST1 to fifth step ST5 are, for example, executed by the machining path generator 1A (more specifically, the CAD/CAM device 10a) according to embodiment 1 or the laser beam machining system 100A according to embodiment 1. The machining path generator 1A and the laser beam machining system 100A are already described in embodiment 1. Thus, redundant description on the machining path generator 1A and the laser beam machining system 100A will be omitted.

### (First Identification Process)

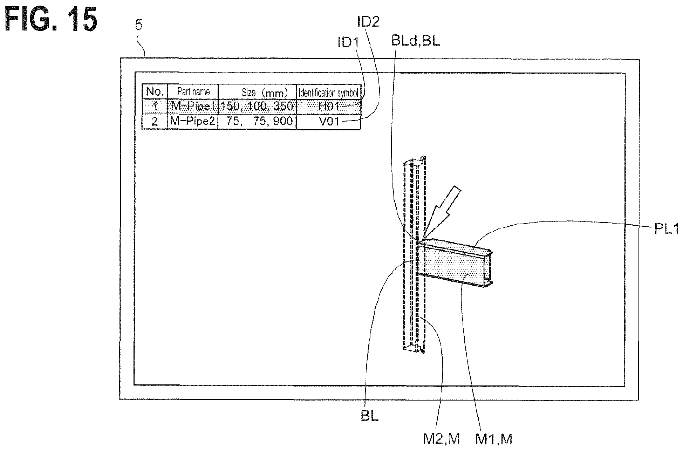

In the examples illustrated in FIG. 14 and FIG. 15, the above-described first identification process (second step ST2) or the above-described first identification processing includes (1) displaying on the display 5 by the calculator 2, the assembly model AM that is a combination of a plurality of models M including the first model M1 obtained by modeling the first elongated member Q1 and the second model M2 obtained by modeling the second elongated member Q2, (2) receiving by the calculator 2, selection of the first model M1 and the second model M2 adjacent to the first model M1 in the assembly model AM displayed on the display 5, and (3) identifying the first identifier ID1, which is the identifier of the first model M1, and the second identifier ID2, which is the identifier of the second model M2, by the calculator 2 in response to the selection of the first model M1 and the second model M2.

### (Modification of First Model M1)

In the examples illustrated in FIG. 14 to FIG. 18 (or FIG. 19 to FIG. 27), the machining path generation method according to embodiment 2 includes executing the model modification processing including modifying the first model M1 (third step ST3). The model modification processing is executed by the calculator 2 executing the program P.

In the examples illustrated in FIG. 14 and FIG. 18 (or FIG. 19 and FIG. 27), the model modification processing includes adding the first marking shape K1 expressing the first identifier ID1 (in other words, the first marking shape K1 corresponding to the shape of the first laser beam engraving LG1) to the first model M1. The first marking shape K1 is already described in embodiment 1. Thus, redundant description on the first marking shape K1 will be omitted.

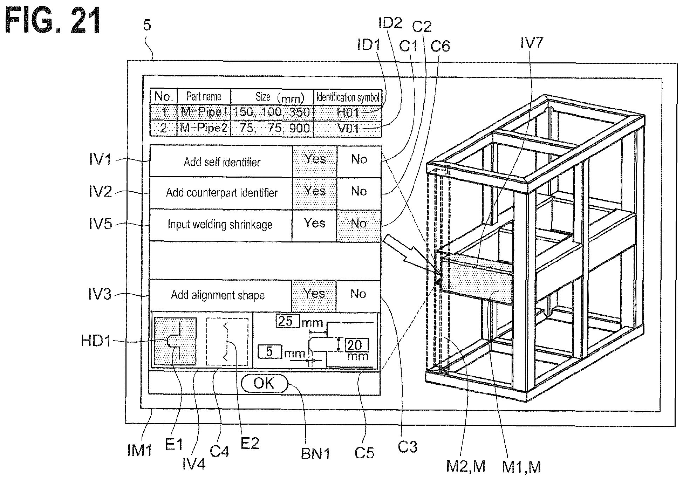

In the example illustrated in FIG. 16 or FIG. 21, the model modification processing includes displayed on the display 5, an image IV1 (more specifically, a first selection window C1) for receiving selection on whether to add the first marking shape K1 to the first model M1. After the addition of the first marking shape K1 to the first model M1 is selected on the inputter 4, the calculator 2 executes the processing of adding the first marking shape K1 to the first model M1. In the example illustrated in FIG. 16 or FIG. 21, the processing of adding the first marking shape K1 to the first model M1 is automatically executed by the calculator 2, when the addition of the first marking shape K1 to the first model M1 is selected and the execution of the model modification is approved (for example, when a first button BN1 displayed on the display 5 is clicked using the pointer 4p).

In the example illustrated in FIG. 16 or FIG. 21, the first marking shape K1 can also be selected not to be added to the first model M1, on the inputter 4. In this case, the modification to add the first marking shape K1 to the first model M1 is not performed. For example, as in the example illustrated in FIG. 4, when the first model M1 includes the first marking shape K1 in advance, the first marking shape K1 does not need to be further added to the first model M1.

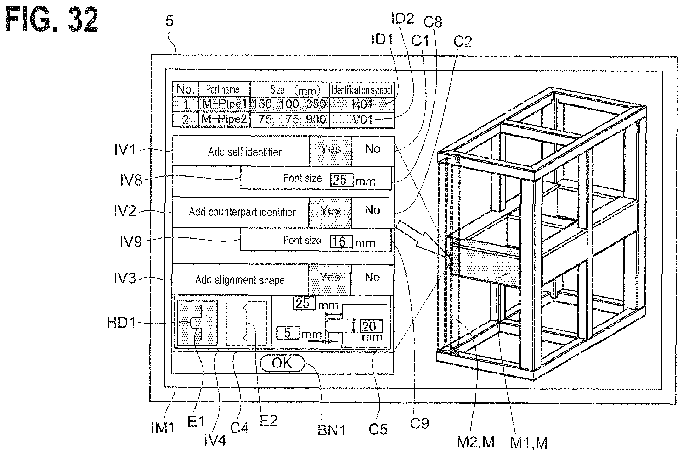

As in the example illustrated in FIG. 32, the model modification processing may include displaying on the display 5 by the calculator 2, an image IV8 (more specifically, a first editing window C8) for receiving a change in the size of the first marking shape K1. In the example illustrated in FIG. 32, the calculator 2 determines the size of the first marking shape K1 added to the first model M1, based on the data input to the first editing window C8. A recommended value (for example, a value registered in advance by the user) for the size of the first marking shape K1 may be displayed in the first editing window C8. In this case, the user can input the size of the first marking shape K1 to the calculator 2 on the inputter 4 with reference to the recommended value.

In the examples illustrated in FIG. 14 and FIG. 18 (or FIG. 19 and FIG. 27), the model modification processing includes adding the second marking shape K2 expressing the second identifier ID2 (in other words, the second marking shape K2 corresponding to the shape of the second laser beam engraving LG2) to the first model M1. The second marking shape K2 is already described in embodiment 1. Thus, redundant description on the second marking shape K2 will be omitted.

In the example illustrated in FIG. 16 or FIG. 21, the model modification processing includes displaying on the display 5, an image IV2 (more specifically, a second selection window C2) for receiving selection on whether to add the second marking shape K2 to the first model M1. After the addition of the second marking shape K2 to the first model M1 is selected on the inputter 4, the calculator 2 executes the processing of adding the second marking shape K2 to the first model M1. In the example illustrated in FIG. 16 or FIG. 21, the processing of adding the second marking shape K2 to the first model M1 is automatically executed by the calculator 2, when the addition of the second marking shape K2 to the first model M1 is selected and the execution of the model modification is approved (for example, when the first button BN1 displayed on the display 5 is clicked using the pointer 4p).

As in the example illustrated in FIG. 32, the model modification processing may include displaying on the display 5 by the calculator 2, an image IV9 (more specifically, a second editing window C9) for receiving a change in the size of the second marking shape K2. In the example illustrated in FIG. 32, the calculator 2 determines the size of the second marking shape K2 added to the first model M1, based on the data input to the second editing window C9. A recommended value (for example, a value registered in advance by the user) for the size of the second marking shape K2 may be displayed in the second editing window C9. In this case, the user can input the size of the second marking shape K2 to the calculator 2 on the inputter 4 with reference to the recommended value.

In the examples illustrated in FIG. 15 to FIG. 18, the model modification processing may include (1) receiving by the calculator 2 on the inputter 4, designation of a designated boundary line segment BLd (for example, see FIG. 15) in a plurality of boundary line segments BL between the first model M1 and the second model M2, and (2) adding the above-described second marking shape K2 (see FIG. 18) to a first surface PL1 defined as a surface, of a plurality of surfaces of the first model M1, in contact with the designated boundary line segment BLd. As in the example illustrated in FIG. 18, the model modification processing may include adding the first marking shape K1 to the above-described first surface PL1.

When the designated boundary line segment BLd can be designated, as in the example illustrated in FIG. 11, the first laser beam engraving LG1 and/or the second laser beam engraving LG2 can be formed at a position to be easily visually recognizable by the user.

In the example illustrated in FIG. 18, the model modification processing includes adding the second marking shape K2 to the first region RG1, adjacent to the second model M2, in the first model M1. In the example illustrated in FIG. 18, the model modification processing includes adding the first marking shape K1 to the second region RG2 far from the second model M2 compared with the first region RG1 in the first model M1.

When the second marking shape K2 is arranged in the first region RG1, the second laser beam engraving LG2 is formed at a position near a connection position between the first elongated member Q1 and the second elongated member Q2 (see FIG. 11). Thus, the user connecting the first elongated member Q1 and the second elongated member Q2 can easily check whether the connection has failed or not.

In the example illustrated in FIG. 18, the model modification processing includes adding to the first model M1 (more specifically, the first region RG1 of the first model M1), the third marking shape K3 corresponding to the shape of the third laser beam engraving LG3 designating the connection position of the first elongated member Q1 to the second elongated member Q2. The third marking shape K3 is already described in embodiment 1. Thus, redundant description on the third marking shape K3 will be omitted.

In the example illustrated in FIG. 11 and FIG. 12, in the state where the first elongated member Q1 and the second elongated member Q2 are combined to each other (see FIG. 12), the first elongated member Q1 is allowed to move relative to the second elongated member Q2 in the first direction DR1 parallel to the longitudinal direction of the second elongated member Q2. In the examples illustrated in FIG. 14 and FIG. 18, to allow the relative movement, the boundary shape between the first model M1 and the second model M2 is a non-meshing shape.

In this case, the third marking shape K3 preferably has a shape uniquely designating the connection position of the first elongated member Q1 to the second elongated member Q2 in the direction parallel to the first direction DR1. In the example illustrated in FIG. 18, the third marking shape K3 includes the first arrow K3-1 uniquely designating the connection position of the first elongated member Q1 to the second elongated member Q2 in the direction parallel to the first direction DR1. The first arrow K3-1 precisely designates the connection position of the first elongated member Q1 to the second elongated member Q2.

When the third marking shape K3 includes the first arrow K3-1, as in the example illustrated in FIG. 11 and FIG. 12, the third laser beam engraving LG3 includes the first arrow engraving LG3-1 precisely designating the connection position of the first elongated member Q1 to the second elongated member Q2. Thus, the user can position the first elongated member Q1 with respect to the second elongated member Q2 while referring to the tip of the first arrow engraving LG3-1.

### (Modification of Second Model M2)

In the examples illustrated in FIG. 14 to FIG. 18 (or FIG. 19 to FIG. 27), the model modification process (or the model modification processing) includes modifying the second model M2. More specifically, in the examples illustrated in FIG. 14 to FIG. 18 (or FIG. 19 to FIG. 27), the model modification process (or model modification processing) includes modifying the first model M1 and modifying the second model M2.

In the examples illustrated in FIG. 14 and FIG. 18 (or FIG. 19 and FIG. 27), the model modification processing includes adding the fourth marking shape K4 (more specifically, the fourth marking shape K4 corresponding to the shape of the fourth laser beam engraving LG4) expressing the second identifier ID2, which is the identifier of the second elongated member Q2, to the second model M2. The fourth marking shape K4 is already described in embodiment 1. Thus, redundant description on the fourth marking shape K4 will be omitted.

In the example illustrated in FIG. 16 or FIG. 21, the calculator 2 displays on the display 5, the image IV1 (more specifically, the first selection window C1) for receiving selection on whether to add a self identification mark to each of the first model M1 and the second model M2. After the addition of the self identification mark is selected on the inputter 4, the calculator 2 executes processing of adding the first marking shape K1 to the first model M1 and adding the fourth marking shape K4 to the second model M2. In the example illustrated in FIG. 16 or FIG. 21, the processing of adding the first marking shape K1 to the first model M1 and adding the fourth marking shape K4 to the second model M2 is automatically executed by the calculator 2, when the addition of the self identification mark is selected and the execution of the model modification is approved (for example, when the first button BN1 displayed on the display 5 is clicked using the pointer 4p).

In the example illustrated in FIG. 16 or FIG. 21, the self identification mark can be selected not to be added to each of the first model M1 and second model M2 on the inputter 4. In this case, the modification to add the first marking shape K1 to first model M1 and the modification to add the fourth marking shape K4 to the second model M2 are not performed. For example, as in the example illustrated in FIG. 4, when the first model M1 includes the first marking shape K1 in advance and the second model M2 includes the fourth marking shape K4 in advance, the self identification mark needs not to be further added to each of the first model M1 and the second model M2.

In the examples illustrated in FIG. 14 and FIG. 18 (or FIG. 19 and FIG. 27), the model modification processing includes adding the fifth marking shape K5 expressing the first identifier ID1, which is the identifier of the first model M1 (in other words, the fifth marking shape K5 corresponding to the shape of the fifth laser beam engraving LG5), to the second model M2. The fifth marking shape K5 is already described in embodiment 1. Thus, redundant description on the fifth marking shape K5 will be omitted.

In the example illustrated in FIG. 16 or FIG. 21, the calculator 2 displays on the display 5, the image IV2 (more specifically, the second selection window C2) for receiving selection on whether to add a counterpart identification mark to each of the first model M1 and the second model M2. After the addition of the counterpart identification mark is selected on the inputter 4, the calculator 2 executes processing of adding the second marking shape K2 to the first model M1 and adding the fifth marking shape K5 to the second model M2. In the example illustrated in FIG. 16 or FIG. 21, the processing of adding the second marking shape K2 to the first model M1 and adding the fifth marking shape K5 to the second model M2 is automatically executed by the calculator 2, when the addition of the counterpart identification mark is selected and the execution of the model modification is approved (for example, when the first button BN1 displayed on the display 5 is clicked using the pointer 4p).

In the examples illustrated in FIG. 15 to FIG. 18, the model modification processing includes (1) receiving by the calculator 2 on the inputter 4, designation of the designated boundary line segment BLd (for example, see FIG. 15) in the plurality of boundary line segments BL between the first model M1 and the second model M2, and (2) adding the above-described fifth marking shape K5 (see FIG. 18) to a second surface PL2 (see FIG. 16) defined as a surface, of a plurality of surfaces of the second model M2, in contact with the designated boundary line segment BLd. As in the example illustrated in FIG. 18, the model modification processing may include adding the fourth marking shape K4 to the above-described second surface PL2.

When the designated boundary line segment BLd can be designated, as in the example illustrated in FIG. 11, the fourth laser beam engraving LG4 and/or the fifth laser beam engraving LG5 can be formed at a position to be easily visually recognizable by the user.

In the example illustrated in FIG. 18, the model modification processing includes adding the fifth marking shape K5 to the fourth region RG4, adjacent to the first model M1, in the second model M2. In the example illustrated in FIG. 18, the model modification processing includes adding the fourth marking shape K4 to the fifth region RG5 far from the from the first model M1 compared with the fourth region RG4 in the second model M2.

When the fifth marking shape K5 is arranged in the fourth region RG4, the fifth laser beam engraving LG5 is formed at a position near a connection position between the first elongated member Q1 and the second elongated member Q2 (see FIG. 11). Thus, the user connecting the first elongated member Q1 and the second elongated member Q2 can easily check whether the connection has failed or not.

In the example illustrated in FIG. 18, the model modification processing includes adding to the second model M2 (more specifically, the fourth region RG4 of the second model M2), the sixth marking shape K6 corresponding to the shape of the sixth laser beam engraving LG6 designating the connection position of the second elongated member Q2 to the first elongated member Q1. The sixth marking shape K6 is already described in embodiment 1. Thus, redundant description on the sixth marking shape K6 will be omitted.

In the example illustrated in FIG. 11 and FIG. 12, in the state where the first elongated member Q1 and the second elongated member Q2 are combined to each other (see FIG. 12), the first elongated member Q1 is allowed to move relative to the second elongated member Q2 in the first direction DR1 parallel to the longitudinal direction of the second elongated member Q2. In the examples illustrated in FIG. 14 and FIG. 18, to allow the relative movement, the boundary shape between the first model M1 and the second model M2 is a non-meshing shape.

In this case, the sixth marking shape K6 preferably has a shape uniquely designating the connection position of the second elongated member Q2 to the first elongated member Q1 in the direction parallel to the first direction DR1. In the example illustrated in FIG. 18, the sixth marking shape K6 includes the second arrow K6-1 uniquely designating the connection position of the second elongated member Q2 to the first elongated member Q1 in the direction parallel to the first direction DR1. The second arrow K6-1 precisely designates the connection position of the second elongated member Q2 to the first elongated member Q1.

When the sixth marking shape K6 includes the second arrow K6-1, as in the example illustrated in FIG. 11 and FIG. 12, the sixth laser beam engraving LG6 includes the second arrow engraving LG6-1 precisely designating the connection position of the second elongated member Q2 to the first elongated member Q1. Thus, the user can position the second elongated member Q2 with respect to the first elongated member Q1 while referring to the tip of the second arrow engraving LG6-1. More specifically, by arranging the first elongated member Q1 and the second elongated member Q2 with the position of the tip of the first arrow engraving LG3-1 being substantially the same as the position of the tip of the second arrow engraving LG6-1, the positioning between the first elongated member Q1 and the second elongated member Q2 is favorably implemented.

In the example illustrated in FIG. 18, the sixth marking shape K6 includes a first line K6-2 designating the connection position and connection angle of the second elongated member Q2 to the first elongated member Q1. The first line K6-2 uniquely designates the connection position of the second elongated member Q2 to the first elongated member Q1 in the direction parallel to the first direction DR1.

When the sixth marking shape K6 includes the first line K6-2, as in the example illustrated in FIG. 11 and FIG. 12, the sixth laser beam engraving LG6 includes first linear engraving LG6-2 designating the connection position and connection angle of the second elongated member Q2 to the first elongated member Q1. Thus, the user can position the second elongated member Q2 with respect to the first elongated member Q1 while referring to the first linear engraving LG6-2. More specifically, by arranging the first elongated member Q1 and the second elongated member Q2 with edge lines of the first linear engraving LG6-2 and the first elongated member Q1 substantially overlapping, the positioning between the first elongated member Q1 and the second elongated member Q2 is favorably implemented in the direction parallel to the longitudinal direction of the second elongated member Q2. Furthermore, the relative angle of the first elongated member Q1 with respect to the second elongated member Q2 is a favorable angle.

### (Modification of Boundary Shape)

As in the examples illustrated in FIG. 19 and FIG. 23, the model modification processing may include modifying a boundary shape BS1 between the first model M1 and the second model M2. More specifically, the model modification processing may include modifying the boundary shape BS1 between the first model M1 and the second model M2 into a predetermined first alignment shape (for example, spigot shape). In this specification, the spigot shape means a boundary shape with a recess and a protrusion that fits the recess.

In the example illustrated in FIG. 19 and FIG. 23, the model modification processing includes modifying, in the boundary region between the first model M1 and the second model M2, the boundary shape (hereinafter, referred to as "first boundary shape BS1-1") of the first model M1 with respect to the second model M2 from the original shape to a first protruding shape Hv1 (see FIG. 23). The model modification processing further includes modifying, in the boundary region between the first model M1 and the second model M2, the boundary shape (hereinafter, referred to as "second boundary shape BS1-2") of the second model M2 with respect to the first model M1 to a first recessed shape Hc1 (see FIG. 23) that is complementary to the first protruding shape Hv1.

In this specification, a portion where the first elongated member Q1 and the second elongated member Q2 are connected is defined as a first connection portion N1 (see FIG. 13). The model modification processing may include determining by the calculator 2, a first shape HD1 (see FIG. 21) as a first alignment shape between the first elongated member Q1 and the second elongated member Q2 in the first connection portion N1, and modifying by the calculator 2, the first boundary shape BS1-1 (see FIG. 23) of the first model M1 with respect to the second model M2 based on the first shape HD1. The model modification processing may further include modifying by the calculator 2, the second boundary shape BS1-2 (see FIG. 23) of the second model M2 with respect to the first model M1 based on the first shape HD1.

Determining the first shape HD1 may include receiving the first input from the user by the inputter 4, and determining by the calculator 2, the first shape HD1 as the first alignment shape between the first elongated member Q1 and the second elongated member Q2 in the first connection portion N1 based on the first input.

In the example illustrated in FIG. 21, the calculator 2 displays on the display 5, an image IV3 (more specifically, a third selection window C3) for receiving selection on whether to modify the boundary shape BS1 between the first model M1 and the second model M2. When the modification of the boundary shape BS1 is selected on the inputter 4 and the first shape HD1 as the first alignment shape between the first elongated member Q1 and the second elongated member Q2 in the first connection portion N1 is determined, the calculator 2 modifies the first boundary shape BS1-1 (see FIG. 19) of the first model M1 into a shape conforming to the first shape HD1 and modifies the second boundary shape BS1-2 of the second model M2 into a shape conforming to the first shape HD1. The shape conforming to the first shape HD1 means a shape matching the first shape HD1, or a shape similar to the first shape HD1 (for example, a shape as a result of minor modification of the first shape HD1 to guarantee backlash between the first elongated member Q1 and the second elongated member Q2).

In the example illustrated in FIG. 21, the calculator 2 displays on the display 5, an image IV4 (more specifically, a first window C4 and/or a second window C5) for receiving a first input identifying the first shape HD1.

In the example illustrated in FIG. 21, the image IV4 (more specifically, the first window C4) for receiving the first input includes an image indicating a first candidate E1 of the shape type and an image indicating a second candidate E2 of the shape type. The first candidate E1 has, for example, a spigot shape of a first type. The second candidate E2 has, for example, a spigot shape of a second type.

In the example illustrated in FIG. 21, the image IV4 for receiving the first input includes the second window C5 on which the dimensions of the first shape HD1 are input.

In the example illustrated in FIG. 21, in response to selection of the first candidate E1 from a plurality of candidates of the shape type on the inputter 4, the calculator 2 employs the shape type indicated by the first candidate E1 as the shape type of the first shape HD1. In the example illustrated in FIG. 21, when the dimensions of the first shape HD1 are input on the inputter 4, the calculator 2 determines the first shape HD1 based on the dimensions input.

More specifically, in the example illustrated in FIG. 21, in response to selection of the first candidate E1 from the plurality of candidates of the shape type on the inputter 4 and input of the dimensions of the first shape HD1 on the inputter 4, the calculator 2 determines the first shape HD1 based on the selected first candidate E1 and the input dimensions.

When the first boundary shape BS1-1 of the first model M1 and the second boundary shape BS1-2 of the second model M2 are modified based on the first shape HD1, the first elongated member Q1 and the second elongated member Q2 are produced with the boundary shape between the first elongated member Q1 and the second elongated member Q2 corresponding to the first shape HD1. Thus, the produced first elongated member Q1 can be easily aligned with the second elongated member Q2 (see FIG. 29).

### (Second Identification Process)

In the examples illustrated in FIG. 24 and FIG. 25, the machining path generation method includes a second identification process of executing the second identification processing including identifying the third identifier ID3, which is the identifier of the third model M3, in response to selection of the first model M1 (for example, the modified first model M1') and the third model M3 adjacent to the first model M1 (for example, the modified first model M1') in the assembly model AM. Additionally, the second identification processing may include identifying the first identifier ID1, which is the identifier of the first model M1, in response to selection of the first model M1 (for example, the modified first model M1') and the third model M3 adjacent to the first model M1 (for example, the modified first model M1') in the assembly model AM.

In the examples illustrated in FIG. 24 and FIG. 25, the above-described second identification process (or the above-described second identification processing) includes (1) displaying by the calculator 2, the assembly model AM that is a combination of the plurality of models M, (2) receiving by the calculator 2, selection of the first model M1 (for example, the modified first model M1') and the third model M3 adjacent to the first model M1 (for example, the modified first model M1') in the assembly model AM displayed on the display 5, and (3) identifying by the calculator 2, the first identifier ID1, which is the identifier of the first model M1, and the third identifier ID3, which is the identifier of the third model M3, in response to the selection of the first model M1 (for example, the modified first model M1') and the third model M3.

### (Further Modification of First Model M1)

In the examples illustrated in FIG. 19 to FIG. 27, the model modification processing includes adding the seventh marking shape K7 (see FIG. 27) expressing the third identifier ID3, which is the identifier of the third model M3 (more specifically, the third identifier ID3 identified by the second identification processing executed), to the first model M1. The seventh marking shape K7 is already described in embodiment 1. Thus, redundant description on the seventh marking shape K7 will be omitted.

In the example illustrated in FIG. 27, the model modification processing includes adding the seventh marking shape K7 to the third region RG3 adjacent to the third model M3 in the first model M1.

When the seventh marking shape K7 is arranged in the third region RG3, the seventh laser beam engraving LG7 is formed at a position near a connection position between the first elongated member Q1 and the third elongated member Q3 (see FIG. 28). Thus, the user connecting the first elongated member Q1 and the third elongated member Q3 can easily check whether the connection has failed or not.

In the example illustrated in FIG. 27, the model modification processing includes adding the eighth marking shape K8 corresponding to the shape of the eighth laser beam engraving LG8 designating the connection position of the first elongated member Q1 to the third elongated member Q3 to the first model M1 (more specifically, the third region RG3 of the first model M1). The eighth marking shape K8 is already described in embodiment 1. Thus, redundant description on the eighth marking shape K8 will be omitted.

When the eighth marking shape K8 is added to the first model M1, the eighth laser beam engraving LG8 (see FIG. 28) designating the connection position of the first elongated member Q1 to the third elongated member Q3 is formed on the first elongated member Q1. Thus, the user can position the first elongated member Q1 with respect to the third elongated member Q3 while referring to the eighth laser beam engraving LG8.

In the example illustrated in FIG. 27, the eighth marking shape K8 includes the third arrow K8-1 precisely designating the connection position of the first elongated member Q1 to the third elongated member Q3.

In the example illustrated in FIG. 27, as a result of executing the model modification processing, the modified first model M1' includes the first marking shape K1, the second marking shape K2, the third marking shape K3, the seventh marking shape K7, and the eighth marking shape K8.

As in the examples illustrated in FIG. 19 and FIG. 27, the model modification processing may include modifying a boundary shape BS2 between the first model M1 and the third model M3. More specifically, the model modification processing may include modifying the boundary shape BS2 between the first model M1 and the third model M3 into a predetermined second alignment shape (for example, spigot shape).

In the examples illustrated in FIG. 19 and FIG. 27, the model modification processing includes modifying, in the boundary region between the first model M1 and the third model M3, the boundary shape (hereinafter, referred to as "third boundary shape BS2-1") of the first model M1 with respect to the third model M3 from the original shape to a second protruding shape Hv2 (see FIG. 27). The model modification processing further includes modifying, in the boundary region between the first model M1 and the third model M3, the boundary shape (hereinafter, referred to as "fourth boundary shape BS2-2") of the third model M3 with respect to the first model M1 into a second recessed shape Hc2 (see FIG. 27) that is complementary to the second protruding shape Hv2.

### (Modification of Third Model M3)

In the examples illustrated in FIG. 19 to FIG. 27, the model modification process (or model modification processing) includes modifying the third model M3. In the examples illustrated in FIG. 19 to FIG. 27, the model modification process (or model modification processing) includes modifying the first model M1, modifying the second model M2, and modifying the third model M3.

In the example illustrated in FIG. 27, the model modification processing includes adding the ninth marking shape K9 expressing the third identifier ID3, which is the identifier of the third model M3 (more specifically, the third identifier ID3 identified by the second identification processing executed), to the third model M3. The ninth marking shape K9 is already described in embodiment 1. Thus, redundant description on the ninth marking shape K9 will be omitted.

When the third model M3 includes the ninth marking shape K9 in advance, the modification to add the ninth marking shape K9 to the third model M3 is omitted.

In the example illustrated in FIG. 27, the model modification processing includes adding the tenth marking shape K10 expressing the first identifier ID1, which is the identifier of the first model M1 (more specifically, the first identifier ID1 identified by the second identification processing executed), to the third model M3. The tenth marking shape K10 is already described in embodiment 1. Thus, redundant description on the tenth marking shape K10 will be omitted.

In the example illustrated in FIG. 27, the model modification processing includes adding to the third model M3, the eleventh marking shape K11 corresponding to the shape of the eleventh laser beam engraving LG11 designating the connection position of the third elongated member Q3 with respect to the first elongated member Q1. The eleventh marking shape K11 is already described in embodiment 1. Thus, redundant description on the eleventh marking shape K11 will be omitted.

In the example illustrated in FIG. 27, the eleventh marking shape K11 includes the fourth arrow K11-1 precisely designating the connection position of the third elongated member Q3 to the first elongated member Q1.

### (Modification of Length of First Model M1)

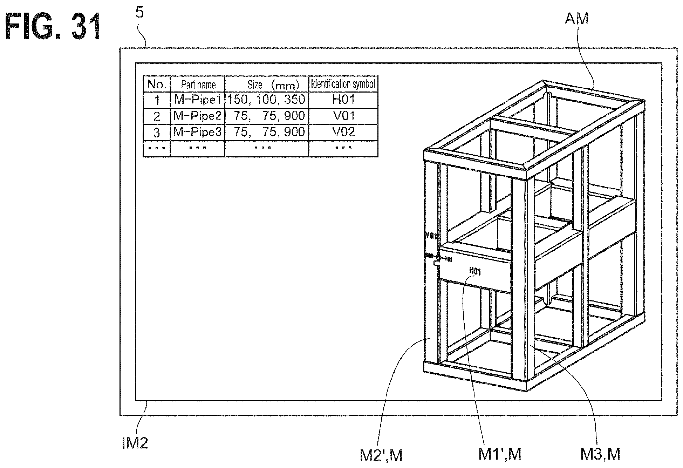

As in the examples illustrated in FIG. 30 and FIG. 31, the model modification processing may include modification to increase the length of the first model M1 by a length corresponding to welding shrinkage. The model modification processing may further include modification to increase the length of the second model M2 by a length corresponding to welding shrinkage.

In the example illustrated in FIG. 13, when the first elongated member Q1 and the second elongated member Q2 are welded in the first connection portion N1, the length of the first elongated member Q1 is reduced from the original length. In other words, the length of the first elongated member Q1 is reduced due to welding shrinkage in the first connection portion N1.

Thus, in the example illustrated in FIG. 30, the length of the first model M1 can be modified to be increased by a length corresponding to the welding shrinkage.

The model modification processing may include processing of determining by the calculator 2, a first value V1 indicating a first shrinkage amount of the first elongated member as a result of the welding in the first connection portion N1, and processing of increasing by the calculator 2, the length of the first model M1 based on the first value V1.

The processing of determining the first value V1 may include receiving a second input (more specifically, an input of first data identifying the first value V1) from the user by the inputter 4, and determining by the calculator 2, the first value V1 indicating the first shrinkage amount of the first elongated member Q1 as a result of the welding in the first connection portion N1, based on the second input (more specifically, an input of the first data identifying the first value V1).

In the example illustrated in FIG. 30, the calculator 2 displays on the display 5, an image IV5 (more specifically, a fourth selection window C6) for receiving selection on whether to modify the length of the first model M1 while taking welding shrinkage into consideration. When the modification of the length of the first model M1 is selected on the inputter 4 and the first value V1 indicating the first shrinkage amount of the first elongated member Q1 is determined, the calculator 2 modifies the length of the first model M1 based on the first value V1. More specifically, the calculator 2 increases the length of the first model M1 by the first value V1.

In the example illustrated in FIG. 30, the calculator 2 displays on the display 5, an image IV6 for receiving the second input (more specifically, an input of the first data identifying the first value V1). The image IV6 for receiving the second input may include a third window C7 for receiving an input of the first data identifying the first value V1.

The third window C7 may be an input window of direct input format for allowing the user to directly input numbers. Alternatively, the third window C7 may be an input window of selection format configured for selection of one of a plurality of listed numbers displayed.

When the length of the first model M1 is modified based on the first value V1, the first elongated member Q1 is produced while taking welding shrinkage into consideration. Thus, when the first elongated member Q1 is welded to the second elongated member Q2, the length of the first elongated member Q1 is reduced from an excessive length to a moderate length due to the welding shrinkage in the first connection portion N1.

### (Image IG of Assembly Model AM)

As in the example illustrated in FIG. 14, the machining path generation method according to embodiment 2 includes displaying on the display 5 by the calculator 2, the image IG of the assembly model AM that is a combination of the plurality of models M including the first model M1 and the second model M2.

In the examples illustrated in FIG. 14 and FIG. 15, the machining path generation method according to embodiment 2 includes extracting the first model M1 and the second model M2 in the assembly model AM by the calculator 2, in response to selection of the first model M1 and the second model M2 in the assembly model AM on the inputter 4.

In the example illustrated in FIG. 15, the machining path generation method according to embodiment 2 includes displaying on the display 5 by the calculator 2, only the extracted first model M1 and second model M2 in the plurality of models M forming the assembly model AM. Alternatively or additionally, the calculator 2 may display the assembly model AM on the display 5, with the extracted first model M1 and second model M2 highlighted in the assembly model AM.

In the example illustrated in FIG. 19, the assembly model AM includes a plurality of boundary regions RB that are each defined as a region indicating the boundary between two adjacent models M. When the assembly model AM includes the plurality of boundary regions RB, it may be difficult for the user to recognize which of the boundary regions RB corresponds to a marking shape added for identifying a counterpart model. As in the examples illustrated in FIG. 22 and FIG. 26, the model modification processing may include adding a distinction mark J for distinguishing the boundary region RB1 provided with the marking shape for identifying the counterpart model from other boundary regions RB2 to the assembly model AM displayed on the display 5. In the examples illustrated in FIG. 22 and FIG. 26, the distinction mark J has a circular shape. Alternatively, the distinction mark J may have other shapes (for example, a polygonal shape).

### (First Image IM1)

As in the example illustrated in FIG. 16 or FIG. 21, the machining path generation method according to embodiment 2 may include displaying on the display 5 by the calculator 2, a first image IM1 for receiving an input from the user. The calculator 2 executes first display processing of displaying the first image IM1 on the display 5 by executing the program P.

As in the example illustrated in FIG. 16 or FIG. 21, the first image IM1 may include the image IV1 (more specifically, the first selection window C1) for receiving selection on whether to add the self identification mark to each of the first model M1 and second model M2. Alternatively or additionally, the first image IM1 may include the image IV2 (more specifically, the second selection window C2) for receiving selection on whether to add the counterpart identification mark to each of the first model M1 and second model M2. Alternatively or additionally, the first image IM1 may include the image IV3 (more specifically, the third selection window C3) for receiving selection on whether to modify the boundary shape BS1 between the first model M1 and the second model M2. Alternatively or additionally, the first image IM1 may include an image IV5 (more specifically, the fourth selection window C6) for receiving selection on whether to modify the length of the first model M1 while taking the welding shrinkage into consideration.

As in the example illustrated in FIG. 16 or FIG. 21, the first image IM1 may include an image IV7 indicating a shape with the first model M1 and the second model M2 combined.

As in the example illustrated in FIG. 32, the first image IM1 may include the image IV8 (more specifically, the first editing window C8) for receiving a change in the size of the first marking shape K1. As in the example illustrated in FIG. 32, the first image IM1 may include the image IV9 (more specifically, the second editing window C9) for receiving a change in the size of the second marking shape K2.

### (Second Image IM2)

As in the example illustrated in FIG. 17 or FIG. 26, the machining path generation method according to embodiment 2 may include displaying on the display 5 by the calculator 2, the second image IM2 including the modified first model M1'. The calculator 2 executes second display processing of displaying the second image IM2 on the display 5 by executing the program P.

In the example illustrated in FIG. 17 or FIG. 26, the second display processing includes displaying the modified first model M1' and the modified second model M2' at once on the display 5. As in the example illustrated in FIG. 26, the second display processing may include displaying the modified first model M1', the modified second model M2', and the modified third model M3' on the display 5.

In the examples illustrated in FIG. 14 and FIG. 17 (or FIG. 19 and FIG. 26), the second display processing includes displaying the modified first model M1' (see FIG. 17 or FIG. 26) at a position (see FIG. 14 or FIG. 19) of the display 5 where the first model M1 has been displayed. The modified first model M1' displayed at the position where the first model M1 has been displayed facilitates the recognition by the user that the modification has been applied to the first model M1.

in the examples illustrated in FIG. 14 and FIG. 17 (or FIG. 19 and FIG. 26), the second display processing includes displaying the modified second model M2' (see FIG. 17 or FIG. 26) at a position (FIG. 14, or see FIG. 19) of the display 5 where the second model M2 has been displayed. The modified second model M2' displayed at the position where the second model M2 has been displayed facilitates the recognition of the user that the modification has been applied to the second model M2.

Displaying the modified first model M1' on the display 5 may include displaying the modified first model M1' (for example, see FIG. 17) in place of the first model M1 (for example, see FIG. 14) and displaying the modified second model M2' on the display 5 may include displaying the modified second model M2' (for example, see FIG. 17) in place of the second model M2 (for example, see FIG. 14) for the sake of facilitating the recognition that the modifications have been applied.

### (First Generation Processing)

The machining path generation method according to embodiment 2 includes executing by the calculator 2, the first generation processing of generating the first machining path for producing the first elongated member Q1. In the first generation processing, the first machining path for producing the first elongated member Q1 is produced based at least on the first model M1 selected in the first identification processing and the second identifier ID2 identified by the first identification processing executed. More specifically, the calculator 2 generates the first machining path for producing the first elongated member Q1 based on the first model M1' (for example, see FIG. 18 or FIG. 27) modified by the above-described model modification processing executed, by executing the program P. The calculator 2 stores the first machining path data DP1 indicating the generated first machining path in the memory 3 (see FIG. 33).

In the example illustrated in FIG. 34, the first machining path T1 includes (1) the first engraving formation path TG1 for forming the first laser beam engraving LG1 (see FIG. 28) expressing the first identifier ID1, which is the identifier of the first model M1 (more specifically, the first identifier ID1 identified by the above-described first identification processing executed), on the first elongated member Q1, (2) the second engraving formation path TG2 for forming the second laser beam engraving LG2 (see FIG. 28) expressing the second identifier ID2, which is the identifier of the second model M2 (more specifically, the second identifier ID2 identified by the above-described first identification processing executed), on the first elongated member Q1, and (3) the first cutting path TC1 for cutting out the first elongated member Q1 from the first elongated workpiece W1.

As in the example illustrated in FIG. 34, the first cutting path TC1 may include a first edge formation path TC1-1 for forming a first edge corresponding to the first boundary shape BS1-1 (see FIG. 27) of the first model M1' modified by the above-described model modification processing executed, on the first elongated member Q1. More specifically, the first cutting path TC1 may include the first edge formation path TC1-1 for forming the first edge conforming to the above-described first shape HD1 (see FIG. 21) on the first elongated member Q1.

Alternatively or additionally, the first cutting path TC1 may include a second edge formation path TC1-2 (see FIG. 34) for forming a second edge corresponding to the third boundary shape BS2-1 (see FIG. 27) of the first model M1 modified by the above-described model modification processing executed, on the first elongated member Q1.

Alternatively or additionally, the first machining path T1 may include the third engraving formation path TG3 for forming the third laser beam engraving LG3 (more specifically, the first arrow engraving LG3-1 illustrated in the FIG. 28) designating the connection position of the first elongated member Q1 to the second elongated member Q2 on the first elongated member Q1.

Alternatively or additionally, the first machining path T1 may include the seventh engraving formation path TG7 for forming the seventh laser beam engraving LG7 (see FIG. 28) expressing the third identifier ID3, which is the identifier of the third model M3 (more specifically, the third identifier ID3 identified by the above-described second identification processing executed), on the first elongated member Q1.

Alternatively or additionally, the first machining path T1 may include the eighth engraving formation path TG8 for forming the eighth laser beam engraving LG8 (more specifically, arrow engraving, see FIG. 28) designating the connection position of the first elongated member Q1 to the third elongated member Q3, on the first elongated member Q1.

### (Second Generation Processing)

The machining path generation method according to embodiment 2 may include executing by the calculator 2, the second generation processing of generating the second machining path for producing the second elongated member Q2. In the second generation processing, the second machining path for producing the second elongated member Q2 is generated based at least on the second model M2 selected in the first identification processing and the first identifier ID1 identified by the first identification processing executed. More specifically, the calculator 2 generates the second machining path for producing the second elongated member Q2 based on the second model M2' (for example, see FIG. 18 or FIG. 27) modified by the above-described model modification processing executed, by executing the program P. The calculator 2 stores the second machining path data DP2 indicating the generated second machining path in the memory 3 (see FIG. 33).

In the example illustrated in FIG. 35, the second machining path T2 includes (1) the fourth engraving formation path TG4 for forming the fourth laser beam engraving LG4 (see FIG. 28) expressing the second identifier ID2, which is the identifier of the second model M2 (more specifically, the second identifier ID2 identified by the above-described first identification processing executed), on the second elongated member Q2, (2) the fifth engraving formation path TG5 for forming the fifth laser beam engraving LG5 (see FIG. 28) expressing the first identifier ID1, which is the identifier of the first model M1 (more specifically, the first identifier ID1 identified by the above-described first identification processing executed), on the second elongated member Q2, and (3) the second cutting path TC2 for cutting out the second elongated member Q2 from the first elongated workpiece W1 or the second elongated workpiece W2 different from the first elongated workpiece W1.

As in the example illustrated in FIG. 35, the second cutting path TC2 may include a third edge formation path TC2-1 for forming a third edge corresponding to the second boundary shape BS1-2 (see FIG. 27) of the second model M2' modified by the above-described model modification processing executed, on the second elongated member Q2. More specifically, the second cutting path TC2 may include the third edge formation path TC2-1 (see FIG. 35) for forming the third edge conforming to the above-described first shape HD1 (see FIG. 21) on the second elongated member Q2.

Alternatively or additionally, the second machining path T2 may include the sixth engraving formation path TG6 (see FIG. 35) for forming the sixth laser beam engraving LG6 (more specifically, the second arrow engraving LG6-1 illustrated in FIG. 28) designating the connection position of the second elongated member Q2 to the first elongated member Q1, on the second elongated member Q2.

As in the example illustrated in FIG. 8, the sixth engraving formation path TG6 may include a machining path for forming the first linear engraving LG6-2 (see FIG. 11) on the second elongated member Q2.

### (Laser Beam Machining Method)

The laser beam machining method according to embodiment 2 includes generating the machining program PG. More specifically, after the above-described first step ST1 to fifth step ST5 are executed, in a sixth step ST6, the machining program PG is generated. The sixth step ST6 is a machining program generation process.

The machining program generation process (sixth step ST6) includes generating the machining program PG based at least on the first machining path. The machining program generation process (sixth step ST6) may include generating the machining program PG based at least on the first machining path and the second machining path. Any known algorithm can be adopted for an algorithm for generating the machining program PG based on a machining path such as the first machining path.

The machining path generator 1 (more specifically, the calculator 2) executing the program P may generate the machining program PG. Alternatively, the controller 7 may generate the machining program PG.

When the machining path generator 1 generates the machining program PG, the laser beam machining method according to embodiment 2 includes receiving the machining program PG generated by the machining path generator 1, by the controller 7. More specifically, the laser beam machining method according to embodiment 2 includes receiving the machining program PG from the machining path generator 1 by the controller 7.

On the other hand, when the controller 7 generates the machining program PG, the laser beam machining method according to embodiment 2 includes receiving the first machining path data DP1 indicating the first machining path by the controller 7 and generating the machining program PG by the controller 7 based at least on the first machining path.

The laser beam machining method according to embodiment 2 includes generating the control command SA based on the machining program PG. More specifically, in a seventh step ST7 after the execution of the above-described sixth step ST6, the controller 7 executing the machining program PG generates the control command SA. The seventh step ST7 is a control command generation process.

The controller 7 is already described in embodiment 1. Thus, redundant description on the controller 7 will be omitted.

As in the example illustrated in FIG. 36, the laser beam machining method according to embodiment 2 includes producing the first elongated member Q1 from the first elongated workpiece W1. More specifically, in an eighth step ST8 after the execution of the above-described seventh step ST7, the laser beam machine 101 receiving the control command SA irradiates the first elongated workpiece W1 with a laser beam to produce the first elongated member Q1 from the first elongated workpiece W1. As in the example illustrated in FIG. 36, when the laser beam machine 101 includes the machining head 140 holding a tool such as the machining tool 141, the eighth step ST8 may include machining the first elongated workpiece W1 using the tool by the laser beam machine 101 receiving the control command SA.

The laser beam machine 101 is already described in embodiment 1. Thus, redundant description on the laser beam machine 101 will be omitted.

As in the example illustrated in FIG. 37, the laser beam machining method according to embodiment 2 may include producing the second elongated member Q2 from the first elongated workpiece W1 or the second elongated workpiece W2 different from the first elongated workpiece W1. More specifically, in a ninth step ST9 after the execution of the above-described seventh step ST7, the laser beam machine 101 receiving the control command SA may irradiate the first elongated workpiece W1 or the second elongated workpiece W2 with a laser beam to produce second elongated member Q2 from the first elongated workpiece W1 or the second elongated workpiece W2. As in the example illustrated in FIG. 37, when the laser beam machine 101 includes the machining head 140 holding a tool such as the machining tool 141, the ninth step ST9 may include machining the first elongated workpiece W1 or the second elongated workpiece W2 using the tool by the laser beam machine 101 receiving the control command SA.

The ninth step ST9 may be executed before the eighth step ST8 is executed or executed after the eighth step ST8 is executed. The ninth step ST9 may be omitted.

### (Program P)

The program P according to embodiments is a program for causing the machining path generator 1 or the laser beam machining system 100 to execute the machining path generation method according to embodiment 2.

More specifically, the program P according to embodiments is a program for causing the machining path generator 1 or the laser beam machining system 100 to execute the machining path generation method (more specifically, the machining path generation method according to embodiment 2) including (1) preparing the assembly model AM that is a combination of the plurality of models M including the first model M1 obtained by modeling the first elongated member Q1 and the second model M2 obtained by modeling the second elongated member Q2 (in other words, the above-described first step ST1), (2) executing the first identification processing including identifying the second identifier ID2, which is the identifier of the second model M2, in response to the selection of the first model M1 and the second model M2 adjacent to the first model M1 in the assembly model AM (in other words, the above-described second step ST2), and (3) generating the first machining path T1 including the first engraving formation path TG1 for forming the first laser beam engraving LG1 expressing the first identifier ID1, which is the identifier of the first model M1, on the first elongated member Q1 and the second engraving formation path TG2 for forming the second laser beam engraving LG2 expressing the second identifier ID2 identified by the first identification processing executed, on the first elongated member Q1 (in other words, the above-described fourth step ST4).

The program P according to embodiments may be a program for causing the machining path generator 1 or the laser beam machining system 100 to execute the machining path generation method (more specifically, the machining path generation method according to embodiment 2) including executing the model modification processing including modifying the first model M1 (the above-described third step ST3) in addition to the above-described first step ST1, the above-described second step ST2, and the above-described fourth step ST4.

The program P according to embodiments may be a program for causing the machining path generator 1 or the laser beam machining system 100 to execute the machining path generation method (more specifically, the machining path generation method according to embodiment 2) including generating the second machining path T2 for producing the second elongated member Q2 (in other words, the above-described fifth step ST5) in addition to the above-described first step ST1 to fourth step ST4.

The machining path generation method according to embodiment 2 is already described. Thus, redundant description on the machining path generation method according to embodiment 2 will be omitted.

The program P may include a plurality of sub-programs. For example, the program P may include a sub-program for executing the above-described first step ST1 (preparation process), the above-described second step ST2 (first identification process), and the above-described third step ST3 (model modification process); and a sub-program for executing the above-described fourth step ST4 (first generation process) and the above-described fifth step ST5 (second generation process).

The program P may include a program for executing the above-described sixth step ST6 (machining program generation process). In other words, the program P according to embodiments may be a program for causing the machining path generator 1 or the laser beam machining system 100 to perform a machining program generation method including the above-described first step ST1 to sixth step ST6.

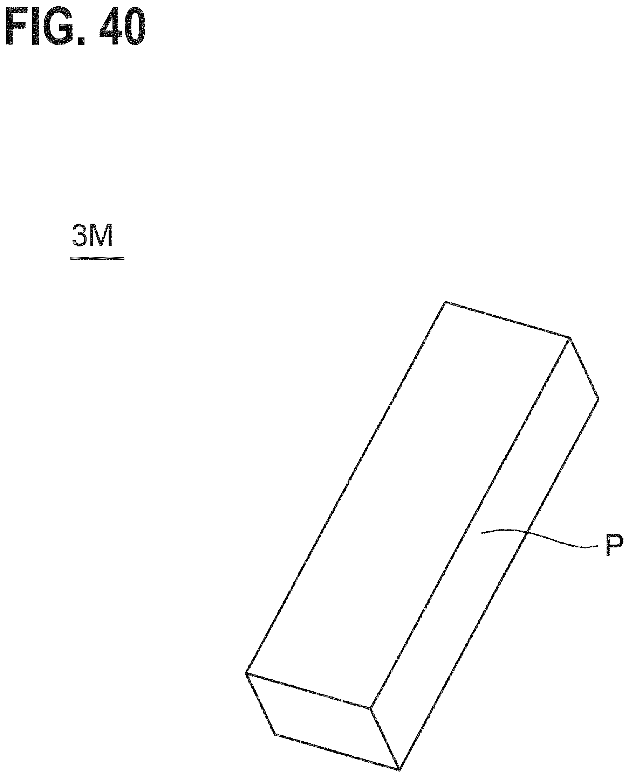

The memory 3 according to embodiment 1 may be a non-volatile storage medium in which the above-described program P is recorded. The non-volatile storage medium in which the above-described program P is recorded may be a portable storage medium 3M as in an example illustrated in FIG. 40.

The program P according to embodiments provides the same effects as the machining path generation method according to embodiment 2 when executed by the machining path generator 1 or the laser beam machining system.

### (Plurality of Elongated Members Q)

FIG. 28 schematically illustrates a plurality of elongated members produced using the laser beam machining system 100A according to embodiment 1 or the laser beam machining method according to embodiment 2.

In the example illustrated in FIG. 28, the first elongated member Q1 is a first pipe Qa. Thus, in this specification, the "first elongated member" can be replaced with a "first pipe". In this specification, the "first model" can be replaced with a "first pipe model". The first pipe Qa is, for example, hollow and is made of metal. The first pipe Qa is, for example, a rectangular pipe (note that the rectangle includes square). In other words, the first pipe Qa has a rectangular shape in a cross section orthogonal to the longitudinal direction of the first pipe Qa. In the example illustrated in FIG. 28, end portions of the first pipe Qa have first end portion openings OP1.

Alternatively, the first elongated member Q1 may be an elongated member having a C-shaped cross section (in other words, C-shape elongated member) or an elongated member having an H-shaped cross section (in other words, H-shape elongated member). Still alternatively, the first elongated member Q1 may be an elongated member other than the pipe, C-shape elongated member, or H-shape elongated member.

In the example illustrated in FIG. 28, the second elongated member Q2 is a second pipe Qb. Thus, in this specification, the "second elongated member" can be replaced with a "second pipe". In this specification, the "second model" can be replaced with a "second pipe model". The second pipe Qb is, for example, hollow and is made of metal. The second pipe Qb is, for example, a rectangular pipe. In other words, the second pipe Qb has a rectangular shape in a cross section orthogonal to the longitudinal direction of the second pipe Qb. In the example illustrated in FIG. 28, end portions of the second pipe Qb have second end portion openings OP2. In the example illustrated in FIG. 28, the thickness of the second elongated member Q2 (for example, the second pipe Qb) may be different from the thickness of the first elongated member Q1 (for example, the first pipe Qa). Alternatively, the thickness of the second elongated member Q2 (for example, the second pipe Qb) may be the same as the thickness of the first elongated member Q1 (for example, the first pipe Qa).

Alternatively, the second elongated member Q2 may be an elongated member having a C-shaped cross section (in other words, C-shape elongated member) or an elongated member having an H-shaped cross section (in other words, H-shape elongated member). Still alternatively, the second elongated member Q2 may be an elongated member other than the pipe, C-shape elongated member, or H-shape elongated member.

In the example illustrated in FIG. 28, the third elongated member Q3 is a third pipe Qc. Thus, in this specification, the "third elongated member" can be replaced with a "third pipe". In this specification, the "third model" can be replaced with a "third pipe model". The third pipe Qc is, for example, hollow and is made of metal. The third pipe Qc is, for example, a rectangular pipe. In other words, the third pipe Qc has a rectangular shape in a cross section orthogonal to the longitudinal direction of the third pipe Qc. In the example illustrated in FIG. 28, end portions of the third pipe Qc have third end portion openings OP3. In the example illustrated in FIG. 28, the thickness of the third elongated member Q3 (for example, the third pipe Qc) is the same as the thickness of the second elongated member Q2 (for example, the second pipe Qb). Alternatively, the thickness of the third elongated member Q3 (for example, the third pipe Qc) may be different from the thickness of the second elongated member Q2 (for example, the second pipe Qb).

Alternatively, the third elongated member Q3 may be an elongated member having a C-shaped cross section (in other words, C-shape elongated member) or an elongated member having an H-shaped cross section (in other words, H-shape elongated member). Still alternatively, the third elongated member Q3 may be an elongated member other than the pipe, C-shape elongated member, or H-shape elongated member.

In the examples illustrated in FIG. 4, FIG. 14, and FIG. 19, in the assembly model AM, the first model M1 and the second model M2 are arranged in a substantially T shape. Alternatively, in the assembly model AM, the first model M1 and the second model M2 may be arranged in a substantially L shape. In the examples illustrated in FIG. 4, FIG. 14, and FIG. 19, in the assembly model AM, the extending direction of the first model M1 and the extending direction of the second model M2 form an angle of 90 degrees. Alternatively, in the assembly model AM, the extending direction of the first model M1 and the extending direction of the second model M2 may form an angle other than an angle of 90 degrees.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numeral

1, 1A ... Machining path generator, 2 ... Calculator, 2a ... Processor, 3 ... Memory, 3M ... Storage medium, 4 ... Inputter, 4k ... Keyboard, 4p ... Pointer, 5 ... Display, 6 ... Communication circuit, 7 ... Controller, 10a ... CAM device, 15 ... Bus, 21 ... Model modification unit, 23 ... Machining path generation unit, 72 ... Display, 73 ... Inputter, 74 ... Calculator, 75 ... Communication circuit, 76 ... Memory, 77 ... Bus, 91 ... CAD device, 100, 100A ... Laser beam machining system, 101 ... Laser beam machine, 103 ... Carry-in part, 105 ... Laser beam machining unit, 107 ... Carry-out part, 110 ... Laser beam emitter, 111 ... Laser head, 112 ... Laser beam emission port, 113 ... Laser beam light source, 115 ... Optical component, 120 ... Mover, 121 ... First mover, 122a ... First moving body, 122b ... First driver, 123a ... Second moving body, 123b ... Second driver, 130 ... Workpiece supporter, 131 ... First chuck, 132 ... Holding member, 134 ... Second chuck, 135 ... Guide roller, 137 ... Rotational driver, 140 ... Machining head, 141 ... Machining tool, AM ... Assembly model, BL ... Boundary line segment, BLd ... Designated boundary line segment, BN1 ... First button, BS1 ... Boundary shape, BS1-1 ... First boundary shape, BS1-2 ... Second boundary shape, BS2 ... Boundary shape, BS2-1 ... Third boundary shape, BS2-2 ... Fourth boundary shape, C1 ... First selection window, C2 ... Second selection window, C3 ... Third selection window, C4 ... First window, C5 ... Second window, C6 ... Fourth selection window, C7 ... Third window, C8 ... First editing window, C9 ... Second editing window, Cb ... First input window, DA ... Model data, DA1 ... First model data, DA2 ... Second model data, DA3 ... Third model data, DP1 ... First machining path data, DP2 ... Second machining path data, DR1 ... First direction, E1 ... First candidate, E2 ... Second candidate, F ... File, HD1 ... First shape, Hc1 ... First recessed shape, Hc2 ... Second recessed shape, Hv1 ... First protruding shape, Hv2 ... Second protruding shape, ID1 ... First identifier, ID2 ... Second identifier, ID3 ... Third identifier, IG ... Image of assembly model, IG1 ... Image indicating shape of first model, IG2 ... Image indicating data of first model, IG3 ... Image indicating shape of second model, IG4 ... Image indicating data of second model, IM1 ... First image, IM2 ... Second image, IU ... Image for receiving input of data identifying each of plurality of models, IV1 ... Image for receiving selection on whether to add first marking shape to first model, IV2 ... Image for receiving selection on whether to add counterpart identification mark to each of models, IV3 ... Image for receiving selection on whether to modify boundary shape, IV4 ... Image for receiving first input, IV5 ... Image for receiving selection on whether to modify length of first model, IV6 ... Image for receiving second input, IV7 ... Image indicating shape with first model and second model combined, IV8 ... Image for receiving change in size of first marking shape, IV9 ... Image for receiving change in size of second marking shape, J ... Distinction mark, K1 ... First marking shape, K2 ... Second marking shape, K3 ... Third marking shape, K3-1 ... First arrow, K4 ... Fourth marking shape, K5 ... Fifth marking shape, K6 ... Sixth marking shape, K6-1 ... Second arrow, K6-2 ... First line, K7 ... Seventh marking shape, K8 ... Eighth marking shape, K8-1 ... Third arrow, K9 ... Ninth marking shape, K10 ... Tenth marking shape, K11 ... Eleventh marking shape, K11-1 ... Fourth arrow, LG1 ... First laser beam engraving, LG2 ... Second laser beam engraving, LG3 ... Third laser beam engraving, LG3-1 ... First arrow engraving, LG4 ... Fourth laser beam engraving, LG5 ... Fifth laser beam engraving, LG6 ... Sixth laser beam engraving, LG6-1 ... Second arrow engraving, LG6-2 ... First linear engraving, LG7 ... Seventh laser beam engraving, LG8 ... Eighth laser beam engraving, LG9 ... Ninth laser beam engraving, LG10 ... Tenth laser beam engraving, LG11 ... Eleventh laser beam engraving, LN ... Wire, M ... Model, M1, M1' ... First model, M2, M2' ... Second model, M3, M3' ... Third model, N1 ... First connection portion, OP1 ... First end portion opening, OP2 ... Second end portion opening, OP3 ... Third end portion opening, P ... Program, PG ... Machining program, PJ ... Calculation program, PL1 ... First surface, PL2 ... Second surface, Q ... Elongated member, Q1 ... First elongated member, Q2 ... Second elongated member, Q3 ... Third elongated member, Qa ... First pipe, Qb ... Second pipe, Qc ... Third pipe, RB, RB1, RB2 ... Boundary region, RG1 ... First region, RG2 ... Second region, RG3 ... Third region, RG4 ... Fourth region, RG5 ... Fifth region, SA ... Control command, SA1 ... Movement command, SA2 ... Emission command, SP1 ... Work room, SP2 ... Office space, T1 ... First machining path, T2 ... Second machining path, TC1 ... First cutting path, TC1-1 ... First edge formation path, TC1-2 ... Second edge formation path, TC2 ... Second cutting path, TC2-1 ... Third edge formation path, TG1 ... First engraving formation path, TG2 ... Second engraving formation path, TG3 ... Third engraving formation path, TG4 ... Fourth engraving formation path, TG5 ... Fifth engraving formation path, TG6 ... Sixth engraving formation path, TG7 ... Seventh engraving formation path, TG8 ... Eighth engraving formation path, V1 ... First value, W ... Elongated workpiece, W1 ... First elongated workpiece, W2 ... Second elongated workpiece

## Claims

1. A machining path generation method comprising:
preparing an assembly model that is a combination of a plurality of models including a first model obtained by modeling a first elongated member and a second model obtained by modeling a second elongated member;
executing first identification processing including identifying a second identifier that is an identifier of the second model in response to selection of the first model and the second model adjacent to the first model in the assembly model; and
generating a first machining path including a first engraving formation path for forming first laser beam engraving expressing a first identifier that is an identifier of the first model on the first elongated member and a second engraving formation path for forming second laser beam engraving expressing the second identifier identified by the first identification processing executed, on the first elongated member.

2. The machining path generation method according to claim 1, wherein the first machining path includes a first cutting path for cutting out the first elongated member from a first elongated workpiece.

3. The machining path generation method according to claim 1 or 2, comprising executing model modification processing including modifying the first model, wherein
the model modification processing includes adding a second marking shape corresponding to a shape of the second laser beam engraving to the first model, and
the first machining path is generated based on the first model modified by the model modification processing executed.

4. The machining path generation method according to claim 3, comprising displaying an image for receiving selection on whether to add the second marking shape to the first model on a display, wherein
after addition of the second marking shape to the first model is selected on an inputter, processing of adding the second marking shape to the first model is executed.

5. The machining path generation method according to claim 3 or 4, comprising receiving designation of a designated boundary line segment in a plurality of boundary line segments between the first model and the second model, wherein
the model modification processing includes adding the second marking shape to a first surface defined as a surface, of a plurality of surfaces of the first model, in contact with the designated boundary line segment.

6. The machining path generation method according to any one of claims 3 to 5, wherein the model modification processing includes adding the second marking shape to a first region, adjacent to the second model, in the first model.

7. The machining path generation method according to any one of claims 3 to 6,
wherein the model modification processing includes adding to the first model, a third marking shape corresponding to a shape of third laser beam engraving designating a connection position of the first elongated member to the second elongated member.

8. The machining path generation method according to claim 7, wherein
in a state where the first elongated member and the second elongated member are combined to each other, a boundary shape between the first model and the second model is a non-meshing shape to allow the first elongated member to move relative to the second elongated member in a first direction parallel to a longitudinal direction of the second elongated member, and
the third marking shape uniquely designates the connection position of the first elongated member to the second elongated member in a direction parallel to the first direction.

9. The machining path generation method according to any one of claims 3 to 7,
wherein the model modification processing includes modifying a boundary shape between the first model and the second model.

10. The machining path generation method according to any one of claims 1 to 9, comprising generating a second machining path for producing the second elongated member, wherein
the first identification processing includes identifying the first identifier,
the second machining path includes
a fourth engraving formation path for forming fourth laser beam engraving expressing the second identifier on the second elongated member, and
a fifth engraving formation path for forming fifth laser beam engraving expressing the first identifier identified by the first identification processing executed, on the second elongated member.

11. The machining path generation method according to any one of claims 1 to 10, comprising
executing second identification processing including identifying a third identifier that is an identifier of the third model in response to selection of the first model and a third model adjacent to the first model, wherein
the first machining path includes a seventh engraving formation path for forming seventh laser beam engraving expressing the third identifier identified by the second identification processing executed, on the first elongated member.

12. The machining path generation method according to any one of claims 1 to 11, wherein the second model adjacent to the first model in the assembly model is automatically selected by a calculator.

13. A laser beam machining system comprising:
a machining path generator configured to execute preparation processing of preparing an assembly model that is a combination of a plurality of models including a first model obtained by modeling a first elongated member and a second model obtained by modeling a second elongated member, first identification processing including identifying a second identifier that is an identifier of the second model in response to selection of the first model and the second model adjacent to the first model in the assembly model, and first generation processing of generating a first machining path including a first engraving formation path for forming first laser beam engraving expressing a first identifier that is an identifier of the first model on the first elongated member, a second engraving formation path for forming second laser beam engraving expressing the second identifier identified by the first identification processing executed, on the first elongated member, and a first cutting path for cutting out the first elongated member from a first elongated workpiece;
a controller configured to execute a machining program generated based at least on the first machining path to generate a control command and transmit the generated control command to a laser beam machine; and
the laser beam machine configured to operate based on the control command and irradiate the first elongated workpiece with a laser beam to produce the first elongated member from the first elongated workpiece.

14. A program for causing a machining path generator or a laser beam machining system to perform the machining path generation method according to any one of claims 1 to 12.

15. A laser beam machining method comprising:
preparing an assembly model that is a combination of a plurality of models including a first model obtained by modeling a first elongated member and a second model obtained by modeling a second elongated member;
executing first identification processing including identifying a second identifier that is an identifier of the second model in response to selection of the first model and the second model adjacent to the first model in the assembly model;
generating a first machining path including a first engraving formation path for forming first laser beam engraving expressing a first identifier that is an identifier of the first model on the first elongated member, a second engraving formation path for forming second laser beam engraving expressing the second identifier identified by the first identification processing executed, on the first elongated member, and a first cutting path for cutting out the first elongated member from a first elongated workpiece;
generating a machining program based at least on the first machining path;
generating a control command by a controller executing the machining program; and
producing the first elongated member from the first elongated workpiece by a laser beam machine receiving the control command and irradiating the first elongated workpiece with a laser beam.
